(19) Europäisches Patentamt / European Patent Office / Office européen des brevets

(11) **EP 1 970 791 A2**

(12) **EUROPEAN PATENT APPLICATION**

(43) Date of publication:
**17.09.2008 Bulletin 2008/38**

(51) Int Cl.:
***G06F* / *(2006.01)***

(21) Application number: **08004177.5**

(22) Date of filing: **06.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.03.2007 JP 2007068559**

(71) Applicant: **MATSUSHITA ELECTRIC INDUSTRIAL CO., LTD.**
**Osaka 571-8501 (JP)**

(72) Inventor: **Yamanaka, Ryutaro**
**Matsushita Electric Industrial Co. Ltd.**
**Chuo-ku**
**Osaka 540-6207 (JP)**

(74) Representative: **Wagner, Bernhard Peter**
**ter Meer Steinmeister & Partner GbR**
**Mauerkircherstrasse 45**
**81679 München (DE)**

(54) **Reconfigurable circuit, reconfigurable circuit system, and reconfigurable circuit setting method**

(57)     Each cell comprises a first selector which accepts K-pieces (K is a natural number of 2 or more) of data, and then outputs a single piece of data; a second selector which accepts K-pieces (K is a natural number of 2 or more) of data, and then outputs a single piece of data; an arithmetic and logic unit which accepts selection output of the first selector and selection output of the second selector in N bits (N is a natural number of 2 or more), and performs a logic operation that is selected from a plurality of logic operations on accepted data of N bits; a selection controller which supplies, to the first selector and the second selector, a data selection control signal for indicating data to be selected; and an ALU controller which supplies, to the arithmetic and logic unit, an ALU control signal that designates the logic operation to be executed. The first selector, the second selector, and the arithmetic and logic unit are capable of reconfiguration based on the selection control signal and the ALU control signal. The first selector and the second selector rearranges M[i] bits of i-th data in a prescribed order based on the selection control signal, and outputs the rearranged data (i is a natural number that satisfies $i \leq K$, and M[i] is an integer that satisfies $\Sigma_{1 \equiv 1}^{K} M[i] \leq N$).

FIG. 1

EP 1 970 791 A2

**Description**

BACKGROUND OF THE INVENTION

Field of the Invention

The present invention relates to a reconfigurable circuit that is capable of reconfiguration, a reconfigurable circuit system, and a reconfigurable circuit setting method. More specifically, the present invention relates to a processor in which base cells each constituted with an ALU (for Arithmetic and Logic Unit) and the like are arranged in an array form.

Currently, there are various radio communication systems (referred to as "radio communication mode" hereinafter), e.g. the so-called second-generation radio communication systems such as PDC (Personal Digital Cellular), GSM (Global System for Mobile-communication), the third-generation radio communication system such as W-CDMA (Wideband Coda Division Mul tiple Access), and also PHS (Personal Handy System) as well as radio LAN (Local Area Network) . As a technique for handling those plurality of radio communication modes with a single radio device, there is a software radio technology which changes functions of the device by rewriting software (programming data) . Furthermore, there are various image compression modes such as JPEG, MPEG, and H.264AVC, various audio compression modes such as AAC (Advanced Audio Coding), WMA (Windows Media Audio), MP3 (MPEG1 audio layer 3), SD-Audio, and ATRAC3 (Plus), and 5 .1 channel surround modes such as Dolby Digital. Moreover, it is expected that kinds of each of those modes will continue to increase in the future. Further, there also exists a multimedia terminal that can deal with the plurality of compression or surround modes with a single player.

For switching the modes (at the time of executing handover between the radio communication modes, at the time of reproducing contents of different compression formats, or the like), a conventional software radio device or multimedia terminal executes programs that correspond to each mode by using a central control unit, typically a microprocessor (MPU) . Alternatively, the conventional software device or the multimedia terminal has customized circuits for each mode (custom ASIC or DSP) loaded for compensating for insufficient performance. Recently, it has become the mainstream to provide those functions by using the so-called SoC (System on Chip) such as a system LSI that comprises MPU (Micro Processing Unit), ASIC (Application Specific Integrated circuit), and DSP (Digital Signal Processor) loaded on a single chip.

In a case of using the SoC, only the circuits corresponding to the modes that are determined in advance at the designing stage are loaded. Thus, it is impossible in many cases to add a new mode after manufacture or shipping in terms of the processing capacities and processing modes. For this, a reconfigurable circuit is loaded to the SoC in advance so as to overcome such issue (see Japanese Published Patent Document (Japanese Unexamined Patent Publication 2004-221997), for example).

The reconfigurable circuit is superior to PLD (Programmable Logic Device) and FPGA (Field Programmable Gate Array) in terms of the mount area, power consumption, and the time required for performing reconfiguration of the circuit. Further, the reconfigurable circuit is superior to a microprocessor, typically VLIW (Very Long Instruction Word) technology, in respect that it can execute a plurality of objects and functions simultaneously (see Japanese Published Patent Document (Japanese Unexamined Patent Publication 2004-102988), for example).

A conventional reconfigurable circuit comprises base cells each constituted with an ALU (arithmetic and logic unit) or the like arranged in an array form, in which inputs/outputs of each cell are coordinated via a network to execute processing. When the reconfigurable circuit is mounted into SoC and a given mode (application) is executed, a pure data path part of filter calculation, for example, can be efficiently executed by the network of the ALUs. However, practically, it is necessary to have a control part for handling starting actions of the data path part, for generating enable signals to a register, etc., in addition to having the data path part. In general, the control part is constituted with a counter logic and the like in many cases. In the control part, the ALUs with a large number of bits are occupied even when generating an enable signal of 1-bit width, for example. Thus, the circuit becomes extremely redundant, which results in expanding the circuit scale.

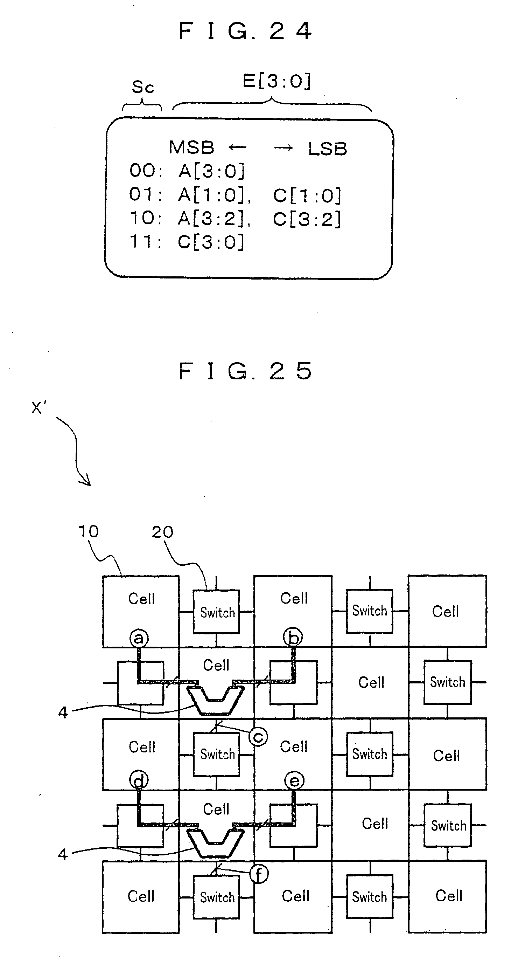

As a way of example, this will be described by referring to a reconfigurable circuit of 4-bit width. Each cell 10 in a reconfigurable circuit X' shown in FIG. 25 is constituted with an ALU 4. In the conventional reconfigurable circuit X' , there are required different ALUs from each other (different cells) for achieving the following two logic operations, for example. As a result, at least six cells 10 and four switches 20 are required.

```
c = a & b   --- (AND operation of a and b)
```

```
f = d & e   --- (AND operation of d and e)
```

As the algorithm, the 4-bit ALU 4 is allotted to each of the signals a, b, c, d, e, and f with the conventional configurable circuit even if the signals are 1-bit signals, because of the structure of the circuit. Therefore, the extra 3 bits are totally redundant, which becomes a factor for inducing an increase in the scale of the circuit.

Meanwhile, for solving such issue, there has also been considered the so-called heterogeneous reconfigurable circuit in which a circuit customized for 1-bit logic is loaded additionally. However, with the heterogeneous configurable circuit, it is difficult to determine the ratio regarding the number of 1-bit logics and the optimum number of ALUs that can deal with any of the modes. This may result in loading a large number of cells anyhow. Further, the heterogeneous reconfigurable circuit imposes a restriction on the setting of the reconfigurable circuit as well, so that setting of the logic circuit and wiring may not be resolved.

As described above, with the conventional reconfigurable circuit, the multiple-bit ALU is occupied even when generating a single-bit enable signal. Thus, there are required a large number of ALUs, so that the circuit scale becomes increased as a result. Furthermore, there is also a risk with the heterogeneous reconfigurable circuit constituted with ALUs and 1-bit logics that the circuit scale may be increased after all. Therefore, the settings of the logic circuits and wiring cannot be resolved.

SUMMARY OF THE INVENTION

The main object of the present invention therefore is to provide a reconfigurable circuit capable of performing efficient execution of logic operations at a plurality of sections on a cell array on which arithmetic and logic units are arranged as a base structure, and to provide a reconfigurable circuit system, as well as a reconfigurable circuit setting method.

In order to overcome the foregoing issues, a reconfigurable circuit of the present invention comprises a plurality of cells, buses, and connectors for connecting each of the cells to each other via a network of the buses, wherein each of the cell comprises: a first selector which accepts K-pieces (K is a natural number of 2 or more) of data, and then outputs a single piece of data; a second selector which accepts K-pieces (K is a natural number of 2 or more) of data, and then outputs a single piece of data; an arithmetic and logic unit which accepts output of the first selector and output of the second selector in N bits (N is a natural number of 2 or more), and performs a logic operation that is selected from a plurality of logic operations on accepted data of N bits; a selection controller which supplies, to the first selector and the second selector, a data selection control signal for indicating data to be selected; and an ALU controller which supplies, to the arithmetic and logic unit, an ALU control signal that designates the logic operation to be executed, wherein the first selector, the second selector, and the arithmetic and logic unit are capable of reconfiguration based on the selection control signal and the ALU control signal ; and the first selector and the second selector rearrange M[i] bits of i-th data in a prescribed order based on the selection control signal, and output the rearranged data (i is a natural number that satisfies i≦K, and M[i] is an integer that satisfies $\Sigma_{i=1}^{K} M[i] \leq N$) .

According to this structure, the input bit width N of arithmetic and logic unit is divided into K pieces. Provided that each of the K pieces of bit widths is expressed as M[1], --- M [K], an expression of "M [1 ] + --- + M [K] ≦N" applies. That is, it can be expressed as "$\Sigma_{i=1}^{K} M [i] \leq N$". For example, when K=3 and N=8, "M[1]+M[2]+M[3] ≦ 8" is a conditional expression. More specifically, there are following combinations in this case; for example.

- A combination of 1 bit, 2 bits, and 5 bits
- A combination of 1 bit, 3 bits, and 4 bits
- A combination of 2 bits, 2 bits, and 4 bits
- A combination of 2 bits, 2 bits, and 3 bits
- A combination of 2 bit, 3 bits, and 3 bits

(This will be described in more details in the section of EMBODIMENTS.)

Each of the first selector and the second selector fetches K-pieces of input data of a combination of the prescribed number of bits, and supplies the data to the arithmetic and logic unit. The input data of the K-number of logic operations from the M[1] bit to M[K] bit at the maximum is inputted to each arithmetic and logic unit having the input of N-bit width. Each input data of those K-number of individually independent logic operations can be executed at each of the arithmetic and logic units. With this, the number of the arithmetic and logic units can be decreased, thereby making it possible to reduce the circuit area.

There is such a form in the present invention that the arithmetic and logic unit executes at least one kind of logic operation that is designated by the ALU control signal. This includes a case where k-number of logic operations executed by a single arithmetic and logic unit are the same. With this, the number of the arithmetic and logic units can be decreased so as to reduce the circuit area

There is such a form in the present invention that arithmetic and logic unit is capable of executing plural kinds of logic operations that are different from each other at every bit. This structure enables each logic operation to be executed by the same arithmetic and logic unit even when the logic operations are different at every bit. With this, the number of the arithmetic and logic units can be decreased further to reduce the circuit area.

There is such a form in the present invention that the reconfigurable circuit further comprises a third selector which accepts a single piece of data, and then outputs K' pieces (K' is a natural number of 2 or more) of data, wherein: the third selector is capable of reconfiguration based on the selection control signal; and the third selector generates each output data by selecting a single combination based on the selection control signal from a plurality of output form combinations that are obtained as a result of operations executed by the arithmetic and logic unit. With this form, output of the arithmetic and logic unit can be outputted to the K-number of output destinations in a flexible form. Thereby, it is possible to connect the base cells more efficiently, so that the circuit area can be reduced, further.

A reconfigurable circuit system of the present invention comprises the above-described reconfigurable circuit; a storage device which stores values of the selection control signal and values of the ALU control signal; and a system controller which selects, from the storage, the selection control signal and the ALU control signal which are to be reconfigured, respectively, for processing a prescribed application, and supplies the selected signals to the reconfigurable circuit to reconfigure the plurality of cells.

With this structure, reconfiguration of the reconfigurable circuit ean be performed by the system controller . This makes it possible to control the reconfiguration of the reconfigurable circuit with high efficiency.

There is such a form in the present invention that the reconfigurable circuit system further comprises a user interface part which outputs a user instruction signal by receiving an instruction from a user, wherein the system controller reconfigures the plurality of cells for processing the application based on the user instruction signal.

There is such a form in the present invention that the reconfigurable circuit system further comprises a recording medium readout device which reads out recorded data from a recording medium and output a medium instruction signal, wherein the system controller reconfigures the plurality of cells for processing the application based on the medium instruction signal.

With this form, it becomes possible to provide the reconfigurable circuit with a small circuit area based on a prescribed application.

A reconfigurable circuit setting method of the present invention is a method which, for executing each logic operation written in a source code in accordance with the source code, distributes each logic operation to each arithmetic and logic unit of a reconfigurable circuit and sets wiring between each of the arithmetic and logic units. The method comprises a first step for extracting the logic operations from the source codes; a second step for judging whether or not the logic operations extracted in the first step are of P bits or less (P is a natural number) or of Q bits or less (Q is a natural number); a third step for judging whether or not the logic operation of P bits or less is the same kind of operation as the logic operation of Q bits or less; and a fourth step for performing distribution of the logic operations and setting of the wiring in such a manner that the logic operation of P bits or less and the logic operation of Q bits or less, which are judged in the third step as being the same kind of logic operations, can be executed by a single arithmetic and logic unit that can accept data of R-bit width (R is a natural number that satisfies $R \geqq P+Q$) .

This method makes it possible to distribute the logic operations of P bits and Q bits to a single arithmetic and logic unit having the input of R-bit width and to set the wiring thereof. With this, the number of the arithmetic and logic units can be decreased so as to reduce the circuit area.

There is such a form in the reconfigurable circuit setting method of the present invention that, when judged in the third step that the logic operation of P bits or less and the logic operation of Q bits or less are of different kinds from each other, the distribution of the logic operations and the setting of the wiring are performed in the fourth step in such a manner that different kinds of logic operations are executed on higher-side Q bits and lower-side P bits.

With this form, it becomes possible to perform distribution of the logic operations and setting of the wiring in such a manner that the logic operations can be executed by the same arithmetic and logic unit even if the logic operation of P bits or less and the logic operation of Q bits or less are different logic operations from each other. With this, the number of the arithmetic and logic units can be decreased still further so as to reduce the circuit area.

A reconfigurable circuit of the present invention comprises a plurality of cells, buses, connectors for connecting each of the cells to each other via a network of the buses, and a connection controller, wherein each of the cell comprises an arithmetic and logic unit having an input port of N bits (N is a natural number of 2 or more) which performs a logic operation that is selected from a plurality of logic operations on N-bit data that is inputted from the input port; and an ALU controller which supplies, to the arithmetic and logic unit, an ALU control signal that designates the logic operation to be executed, wherein the connection controller supplies, to the connectors, a connection control signal for designating a connection form of the buses that are connected to each other via the network; the arithmetic and logic unit is capable of reconfiguration based on the ALU control signal; and K-number of the busses (K is a natural number of 2 or more), after prescribed M[i] bits of i-th bus are arranged in a prescribed order based on the connection control signal, are connected to the input port (i is a natural number that satisfies $i \leq K$, and M[i] is an integer that satisfies $\Sigma_{i=1}^{K} M[i] \leq N$) .

With this structure, the connector itself fetches a plurality of pieces of input data in combinations of a prescribed number of bits. Thus, it is unnecessary to provide the first selector and the second selector, which are required in the above-described structure. With this structure, the input data generated by putting each of the logic operations of M[i] bits into N bits can be supplied to a single arithmetic and logic unit that can accept the input data with N-bit width. Thereby, the number of the arithmetic and logic units can be decreased so as to reduce the circuit area.

There is such a form in the reconfigurable circuit of the present invention that the arithmetic and logic unit is capable of executing at least one kind of logic operation that is designated by the ALU control signal.

With this form, even the logic operations at a plurality of sections can be executed by a single arithmetic and logic unit that can accept the input of data with N-bit width, as long as the logic operations are of N bits or less in total. Therefore, the number of the arithmetic and logic units can be decreased further, so that the circuit area can be reduced.

There is such a form in the reconfigurable circuit of the present invention that the arithmetic and logic unit is capable of executing plural kinds of logic operations that are different from each other at every bit. This structure enables those logic operations to be executed by the same arithmetic and logic unit even when the logic operations are different at every bit. With this, the number of the arithmetic and logic units can be decreased further to reduce the circuit area.

Further, there is such a form in the present invention that the reconfigurable circuit further comprises a selector which accepts a single piece of data, and then outputs K' pieces (K' is a natural number of 2 or more) of data, wherein the selector is capable of reconfiguration based on the selection control signal; and the selector generates each output data by selecting a single combination based on the selection control signal from a plurality of output form combinations that are obtained as a result of operations executed by the arithmetic and logic unit.

With this form, output of the arithmetic and logic unit can be supplied to a plural ity of output destinations in a flexible form. Thereby, it is possible to connect between the base cells more efficiently, so that the circuit area can be reduced further.

A reconfigurable circuit of the present invention comprises the above-described reconfigurable circuit; a storage device which stores values of the selection control signal and values of the ALU control signal; and a system controller which selects and reads out, from the storage, the selection control signal and the ALU control signal which are to be reconfigured, respectively, for processing a prescribed application, and supplies the selected signals to the reconfigurable circuit.

With this structure, reconfiguration of the reconfigurable circuit can be performed by the system controller. This makes it possible to control the reconfiguration of the reconfigurable circuit with high efficiency.

There is such a form in the present invention that the reconfigurable system further comprises a user interface part which outputs a user instruction signal by receiving an instruction from a user, wherein the system controller reconfigures the plurality of cells for processing the application based on the user instruction signal.

Further, there is also such a form in the present invention that the reconfigurable circuit of the above-described structure further comprises a recording medium readout device which reads out recorded data from a recording medium and output a medium instruction signal, wherein the system controller reconfigures the plurality of cells for processing the application based on the medium instruction signal.

With these forms, it becomes possible to provide the reconfigurable circuit with a small circuit area based on a prescribed application.

A reconfigurable circuit setting method of the present invention is a method which, for executing each logic operation written in a source code in accordance with the source code, distributes each logic operation to each arithmetic and logic uni t of a reconfigurable circuit and sets wiring between each of the arithmetic and logic units. The method comprises a first step for extracting the logic operations from the source codes; a second step for judging whether or not the logic operations extracted the first step are of P bits or less (P is a natural number) or of Q bits or less (Q is a natural number); a third step for judging whether or not the logic operation of P bits or less is the same kind of operation as the logic operation of Q bits or less; and a fourth step for performing distribution of the logic operations and setting of the wiring in such a manner that the logic operation of P bits or less and the logic operation of Q bits or less, which are judged in the third step as being the same kind of logic operations, can be executed by a single arithmetic and logic unit.

This structure makes it possible to distribute the logic operations of P bits and Q bits to a single arithmetic and logic unit and to set the wirings. With this, the number of the arithmetic and logic units can be decreased so as to reduce the circuit area.

There is such a form in the reconfigurable circuit setting method of the present invention that, when judged in the third step that the logic operation of P bits or less and the logic operation of P bits or less are of different kinds from each other, the distribution of the logic operations and the setting of the wiring are performed in the fourth step in such a manner that the different kinds of logic operations are executed on higher-side Q bits and lower-side P bits.

With this form, it becomes possible to perform distribution of the logic operations and setting of the necessary wiring in such a manner that the logic operations can be executed by the same arithmetic and logic unit even if the logic operations of P bits or less and the logic operation of Q bits or less are different logic operations from each other.

There is such a form in the present invention that the reconfigurable circuit setting method further comprises an external information input step for converting inputted external information into source code changing information; and a source code changing step which changes a prescribed position of a source code based on the source code changing information, and outputs the source code that has been changed as a new source code.

With this form, it becomes possible to set the reconfigurable circuit in a small area, even if the source code of the application is changed according to external information after the product is shipped. With this, the reconfigurable circuit, even though it is low priced, becomes capable of conforming to systems in a flexible manner.

There is such a form in the present invention that the reconfigurable circuit setting method further comprises a fault judging step which , upon receiving input of fault cell position information that indicates a position of a fault cell in the reconfigurable circuit, performs distribution of the logic operations and setting of the wiring again after excluding the fault cell.

With this form, even if there is a fault cell, it becomes possible to perform distribution of the logic operations and setting of wiring by avoiding the fault cell. This makes it possible to perform logic operations by a reconfigurable circuit having a small area. Thereby, the yields thereof can be improved, so that the unit price of the chips can be reduced.

With the present invention, it is possible to reduce the circuit area by decreasing the number of arithmetic and logic units required in a prescribed application as a whole, through distributing a plurality of logic operations to be executed collectively by a single arithmetic and logic unit. As a result, a low-price system LSI can be provided.

The technique of the present invention is capable of distributing a plurality of logic operations to be executed collectively by a single arithmetic and logic unit and capable of setting the wiring thereof. Therefore, it is useful as a multimedia terminal or the like, which comprises a reconfigurable circuit, and is also applicable to software radio devices or the like. As a result, it becomes possible to provide a low-price system LSI.

BRIEF DESCRIPTION OF THE DRAWINGS

Other objects of the present invention will become clear from the following description of the preferred embodiments and the appended claims. Those skilled in the art will understand many other advantages of the present invention not described herein by embodying the present invention.

FIG. 1 is a block diagram showing a structure of a reconfigurable circuit according to a first embodiment of the present invention;

FIG. 2 is a block diagram showing a structure of a main part of the reconfigurable circuit according to the first embodiment of the present invention;

FIG. 3 is a block diagram showing a structure of a switch of the reconfigurable circuit according to the first embodiment of the present invention;

FIG. 4 is a block diagram showing a structure of a cell of the reconfigurable circuit according to the first embodiment of the present invention;

FIG. 5 is an illustration showing operations of a selector according to the first embodiment of the present invention;

FIG. 6 shows logic operation instructions that can be executed by an ALU according to the first embodiment of the present invention;

FIG. 7 shows logic operation instructions that can be executed by an ALU according to a second embodiment of the present invention;

FIG. 8 is a block diagram showing a structure of a cell of the re-configurable circuit according to a third embodiment of the present invention;

FIG. 9 is an illustration showing operations of a selector according to the third embodiment of the present invention;

FIG. 10 is a block diagram showing a structure of a reconfigurable circuit system according to a fourth embodiment of the present invention;

FIG. 11 is a block diagram showing a structure of a reconfigurable circuit system according to a fifth embodiment of the present invention;

FIG. 12 is an illustration showing an example of the contents of a storage device according to the fifth embodiment of the present invention;

FIG. 13 is a block diagram showing a structure of a reconfigurable circuit system according to a sixth embodiment of the present invention;

FIG. 14 is a flowchart showing the processing procedure of a reconfigurable circuit setting method according to a seventh embodiment of the present invention;

FIG. 15 is a flowchart showing the processing procedure of a reconfigurable circuit setting method according to an eighth embodiment of the present invention;

FIG. 16 is a flowchart showing the processing procedure of a reconfigurable circuit setting method according to a ninth embodiment of the present invention;

FIG. 17 is an illustration showing an example of changing a source code in a source code changing step according to the ninth embodiment of the present invention;

FIG. 18 is a flowchart showing the processing procedure of a reconfigurable circuit setting method according to a tenth embodiment of the present invention;

FIG. 19 is an illustration showing an example of setting the reconfigurable circuit while avoiding a fault cell according to the tenth embodiment of the present invention;

FIG. 20 is a block diagram showing a structure of a reconfigurable circuit according to an eleventh embodiment of the present invention;

FIG. 21 is a block diagram showing a structure of a main part of the reconfigurable circuit according to the eleventh embodiment of the present invention;

FIG. 22 is a block diagram showing a structure of a switch of the reconfigurable circuit according to the eleventh embodiment of the present invention;

FIG. 23 is a block diagram showing a structure of a cell of the reconfigurable circuit according to the eleventh embodiment of the present invention;

FIG. 24 is an illustration showing operations of a selector according to the eleventh embodiment of the present invention; and

FIG. 25 is a block diagram showing an example of setting a conventional reconfigurable circuit.

## DETAILED DESCRIPTION OF THE INVENTION

The main point of the present invention is to reduce the number of arithmetic and logic units necessary for a prescribed entire application so as to reduce the area of a reconfigurable circuit in which each base cell having an ALU is connected via a wiring network, through making settings capable of processing a plurality of logic operations collectively by a single arithmetic and logic unit. Hereinafter, embodiments of the present invention will be described in detail by referring to the accompanying drawings.

(FIRST EMBODIMENT)

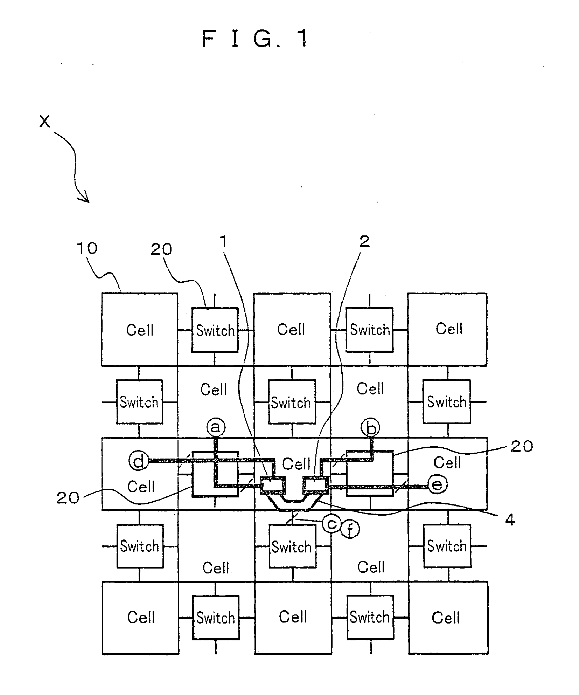

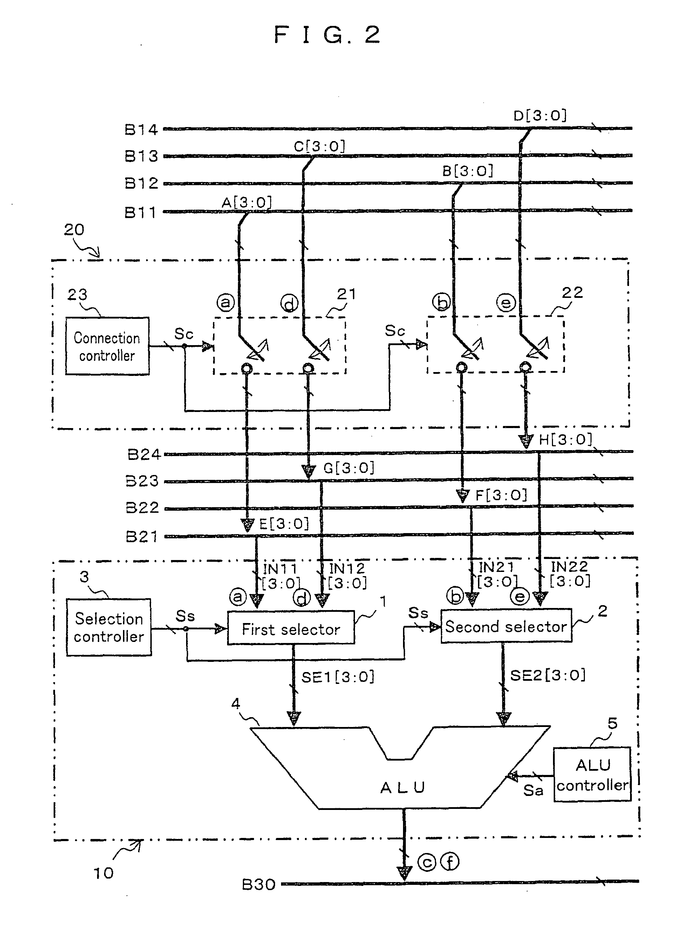

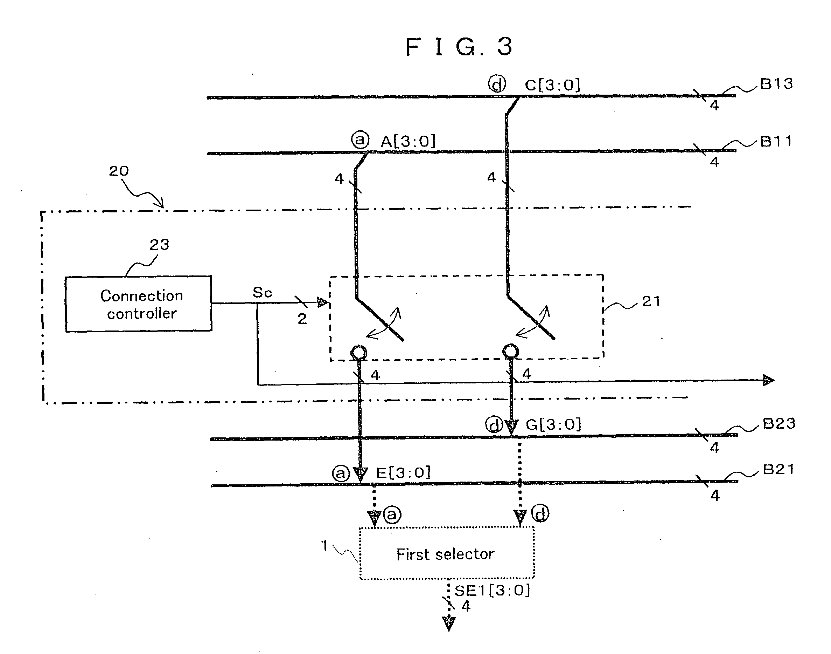

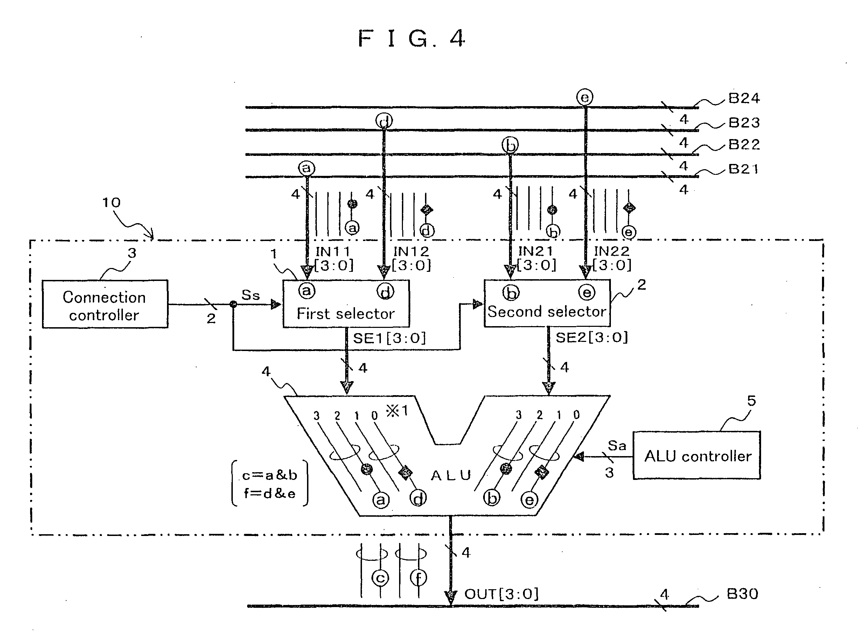

FIG. 1 is a block diagram showing a structure of a reconfigurable circuit X according to a first embodiment of the present invention, FIG. 2 is a block diagram showing a structure of a main part of the reconfigurable circuit X, FIG. 3 is a block diagram showing a structure of a switch 20 that is connected to a cell 10 of the reconfigurable circuit, and FIG. 4 is a block diagram showing a structure of the cell 10 of the reconfigurable circuit.

The cell 10 of the reconfigurable circuit shown in FIG. 4 is arranged in matrix in the reconfigurable circuit of FIG. 1. Further, the switch 20 shown in FIG. 3 is arranged in matrix between the neighboring cells 10 in the reconfigurable circuit X of FIG. 1.

In the reconfigurable circuit X shown in FIG. 1, a plurality of cells 10 and a plurality of switches 20 are arranged alternately in both horizontal and vertical directions to be in a matrix form. Each of the cells 10 comprises a first selector 1, a second selector 2, and an arithmetic and logic unit (referred to as ALU hereinafter) 4 as base elements. For example, the cell 10 outputting a signal a and the cell 10 outputting a signal d are inputted to the first selector 1 of a target sell 10 via the switch 20. Further, the cell 10 outputting a signal b and the cell 10 outputting a signal e are inputted to the second selector 2 of the target cell 10 via another switch 20. In the target cell 10, the ALU 4 performs a logic operation of the signal a supplied from the first selector 1 and the signal b supplied from the second selector 2, and outputs an operation result c. Further, the ALU 4 performs a logic operation of the signal d supplied from the first selector 1 and the signal e supplied from the second selector 2, and outputs an operation result f. At this time, the logic operation of the signal a and the signal b and the logic operation of the signal d and the signal e are performed by a single ALU 4. It is a technical feature of the present invention to perform the plurality of logic operations by a single ALU 4. The procedure will be described more specifically in order by referring to FIG. 2 - FIG. 6.

The switch 20 comprises a first connector 21, a second connector 22, and a connection controller 23. One of switching parts in the first connector 21 executes connection/isolation between a bus B11 and a bus B21, and the other switching part executes connection/isolation between a bus B13 and a bus B23. The switching control is performed based on a connection control signal Sc from the connection controller 23. The bus B21 becomes one of the inputs of a first selector 1 of the cell 10, and the bus B23 becomes the other input of the first selector 1. For example, when a connection control signal Sc [1] is 1, A[3:0] is inputted to the bus B21. When the connection control signal Sc[0] is 1, C [3:0] is inputted to the bus B23. Note here that Sc[1] indicates the first bit , and Se[0] indicates the 0-th bit. The bus B21 transmits E[3:0] that is outputted from the first connector 21 as input IN11 [3:0] of the first selector 1. Similarly, the bus B23 transmits G[3:0] that is outputted from the first connector 21 as input IN12[3:0] of the first selector 1.

In the meantime, one of switching parts in the second connector 22 executes connection/isolation between a bus B12 and a bus B22 , and the other switching part executes connection/isolation between a bus B14 and a bus B24. The switching control is performed based on the connection control signal Sc from the connection controller 23. The bus B22 becomes one of the inputs of a second selector 2 of the cell 10, and the bus B24 becomes the other input of the second selector 2. For example, when a connection control signal Sc [1] is 1, B[3:0] is inputted to the bus B22. When the connection control signal Sc[0] is 1, D[3:0] is inputted to the bus B24. The bus B22 transmits F[3:0] that is outputted from the second connector 22 as input TN21[3:0] of the second selector 2. Similarly, the bus B24 transmits E[3:0] that is outputted from the second connector 22 as input IN22[3:0] of the second selector 2.

The cell 10 of the reconfigurable circuit comprises the first selector 1, the second selector 2, a selection controller 3, an ALU 4, and an ALU controller 5. The buses B21, B22, B23, and B24 receive inputs of signals, respectively, from other cells via the switch circuits 20. The buses B21 , B22, 823, and B24 transmit the inputted signals. The first selector 1 selects and synthesizes a prescribed bit of the bus B21 and a prescribed bit of the bus B23 based on a selection control signal Ss from the selection controller 3, and then outputs the processing result to one of the inputs of the ALU 4 as a selection result SE1. Similarly, the second selector 2 selects and synthesizes a prescribed bit of the bus B22 and a prescribed bit of the bus B24 based on the selection control signal Ss from the selection controller 3, and then outputs the processing result to the other input of the ALU 4 as a selection result SE2. The selection control signal Ss is a 2-bit signal for indicating the output forms to the first selector 1 and the second selector 2.

The input IN11[3:0] that is a signal from the bus B21, the input IN12[3:0] that is a signal from the bus B23, and the selection control signal Ss are inputted to the first selector 1. The first selector 1 processes the input IN11[3:0] and the input IN12[3:0] into a prescribed output form based on the value of the selection control signal Ss, and then outputs the processing result as the selection result SE1 [3: 0] . Note here that [3:0] indicates that it is in a 4-bit structure from 0th bit to 3rd bit.

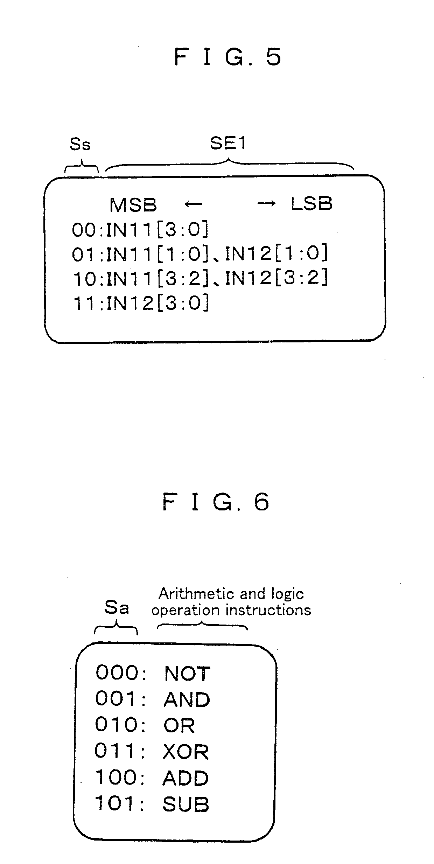

Specifically, as shown in FIG. 5, the first selector 1 executes the following processing.

- When the selection control signal Ss is "00", the first selector 1 outputs the 4-bit input IN11[3:0] from the bus B21 as it is as the selection result SE1.
- When the selection control signal Ss is "01" , the first selector 1 performs processing to put the lower 2-bit input IN11[1:0] from the bus B21 and the lower 2-bit input IN12 [1:0] from the bus B23 into a 4-bit form, and outputs the resultant as the selection result SE1.
- When the selection control signal Ss is "10", the first selector 1 performs processing to put the higher 2-bit input IN11[3:2] from the bus B21 and the higher 2-bit input IN12[3:2] from the bus B23 into a 4-bit form, and outputs the resultant as the selection result SE1.
- When the selection control signal Ss is "11", the first selector 1 outputs the 4-bit input IN12[3:0] from the bus B23 as it is as the selection result SE1.

Similarly, the input IN21 [3:0] that is a signal from the bus B22, the input IN22[3:0] that is a signal from the bus 324 , and the selection control signal Ss are inputted to the second selector 2. The second selector 2 processes the input IN21[3:0] and the input IN22[3:0] into a prescribed output form based on the value of the selection control signal Ss and, then, outputs the processing result as the selection result SE2[3:0].

Specifically, the second selector 2 executes the following processing.

- When the selection control signal Ss is "00" of 2 bi ts, the second selector 2 outputs the 4-bit input IN21 [3:0] from the bus B22 as it is as the selection result SE2.
- When the selection control signal Ss is "01", the second selector 2 performs processing to put the lower 2-bit input IN21[1:0] from the bus B22 and the lower 2-bit input IN22[1:0] from the bus B24 into a 4-bit form, and outputs the resultant as the selection result SE2 .
- When the selection control signal Ss is "10", the second selector 2 performs processing to put the higher 2-bit input IN21[3:2] from the bus B22 and the higher 2-bit input IN22[3:2] from the bus B24 into a 4-bit form, and outputs the resultant as the selection result SE2.
- When the selection control signal Ss is "11", the second selector 2 outputs the 4-bit input IN22[3:0] from the bus B24 as it is as the selection result SE2.

The ALU controller 5 outputs a 3-bit ALU control signal Sa for giving an arithmetic and logic operation instruction that is executed by the ALU 4. The selection result SE1 [3:0] from the first selector 1, the selection result SE2 [3: 0] from the second selector 2, and the 3-bit ALU control signal Sa from the ALU controller 5 are supplied to the ALU 4. Upon receiving those, the ALU 4 executes an arithmetic and logic operation that corresponds to the table of FIG. 6, based on the value of the ALU control signal Sa, and outputs the operation result to an output bus B30 as an output OUT[3:0].

Specifically, as shown in FIG. 6, the ALU 4 undergoes and executes the following.

- When the ALU control signal Sa is "001", the ALU 4 is reconfigured as an AND circuit to execute an AND operation of the selection result SE1 from the first selector 1 and the selection result SE2 from the second selector 2.
- When the ALU control signal Sa is "010", the A-LU 4 is reconfigured as an OR circuit to execute an OR operation of the selection result SE1 from the first selector 1 and the selection result SE2 from the second selector 2.

The output bus B30 transmits the output OUT[3:0] to the outside of the cell 10 of the reconfigurable circuit.

Next, actions of the reconfigurable circuit X of this embodiment constituted in the manner described above will be described. Hereinafter, explanations are provided on an assumption that the reconfigurable circuit is constituted to have 4 bits as the operation bit width. However, it is noted that the embodiment can be achieved as well with other bit width by applying necessary modifications. Described herein is a case of achieving the following two logic operations.

```
c = a & b   --- (AND operation of a and b)


f = d & e   --- (AND operation of d and e)
```

For facilitating easy understanding, it is assumed in the following explanations that a, b, c, d, e, and f are each 1 bit. The reconfigurable circuit X finds sections that execute common logic operations among a plurality of logic operations within the application, put those with the operation bit width of 2 bits or less into a single piece of data to generate new 4-bit data, and performs logic operations of the generated new data (4 bit) by using a single ALU 4.

As the ALU control signal Ss, the ALU controller 5 outputs "001" for designating an AND circuit. The ALU 4 that has received the ALU control signal Sa of "001" is reconfigured as an AND circuit (see FIG. 6).

For fetching the signal a from a certain cell 10 as the first input of the first selector 1 and fetching the signal d from another sell 10 as the second input of the first selector 1, the connection controller 23 of the switch 20 outputs "11" as a connection control signal Sc to be supplied to the first connector 21. As a result, A[3:0] of the bus B11 is transmitted to E[3:0] of the bus B21, and C[3:0] of the bus B13 is transmitted to G[3:0] of the bus B23.

Further for fetching the signal b from a certain cell 10 as the first input of the second selector 2 and fetching the signal e from another cell 10 as the second input of the second selector 2, the connection controller 23 outputs "11" as the connection control signal Sc to be supplied to the second connector 22. As a result, B [3:0] of the bus B12 is transmitted to F[3:0] of the bus B22, and D[3:0] of the bus B14 is transmitted to H[3:0] of the bus B24 .

Further, as the selection control signal Ss, the selection controller 3 outputs "01" to the first selector 1 and the second selector 2. The first selector 1 and the second selector 2 which have received the selection control signal Ss are reconfigured to the circuits that correspond to the content indicated by the selection control signal Ss. That is, the first selector 1 that has received "01" as the selection control signal Ss puts the input IN11 [1 :0] and the input IN12[1: 0] together to form new 4-bit data, and outputs the new generated data (4 bits). With this, the signal a is outputted to the bit 2 of the selection result SE1 and the signal d is outputted to the bit 0 of the selection result SE1, as indicated by ※ 1 inside the ALU 4 of FIG. 4. Accordingly, the signal a is transmitted to the input IN11[0] from the bus B21, and the signal d is transmitted to the input IN12[0] from the bus B23, respectively.

Similarly, the second selector 2 that has received "01" as the selection control signal Ss puts the input IN21[1: 0] and the input IN22[1:0] together to form new 4-bit data, and outputs the new generated data (4 bits) . That is, as indicated by ※ 1 inside the ALU 4 of FIG. 4, the signal b is outputted to the bit 2 of the selection result SE2 and the signal e is outputted to the bit 0 of the selection result SE2 . Accordingly, the signal b is transmitted to the input IN21[0] from the bus B22, and the signal e is transmitted to the input IN22 [G] from the bus B24 , respectively. In this manner, distribution of logic operations and setting of wiring within the cell are performed.

The circuit structure of the ALU 4 that has received "001" as the ALU control signal Sa is reconfigured to an AND circuit. The reconfigured ALU 4 simultaneously executes AND operation of the selection result SE1[3:2] and the selection-result SE2 [3:2], and AND operation of the selection result SE1 [1:0] and the selection result SE2[1:0]. After performing the operations described above, the ALU 4 outputs the output OUT [3:0] to the output bus B30 . With this, an operation result c is outputted to the bit 2 of the output, and an operation result f is outputted to the bit 0 of the output.

As described above, in the reconfigurable circuit X of this embodiment, a single ALU 4 is used for two operations, i.e. AND operation of c = a & b and AND operation of f = d & e. Like this, it is possible to execute the logic operations at two sections by a single ALU 4, so that there are required only five cells 10 of the reconfigurable circuit, while at least six cells are required in the conventional case shown in FIG. 25. At the same time, only two switches 20 are required, while four switches are required conventionally. Further, two ALU 4 required conventionally can be reduced to a single ALU 4. Thus, by applying such operations to the entire application, the circuit area can be reduced. Furthermore, two logic operations can be executed with high efficiency.

For facilitating understanding, it is assumed in the explanation of this embodiment that a, b, c, d, e, and f are each 1 bit. However, the present embodiment is not limited to such case. For example, a, b, and c may each be 1 bit, and d, e, and f may each be 2 bits. Inversely, a, b, and c may each be 2 bits, and d, e, and f may each be 1 bi t . Further, a, b, c, d, e, and f may each be 2 bits.

The selection control signal Ss and the output term thereof are not limited to those shown in FIG. 5. For example, the input IN11[2:0] and the input IN12[0] may be put into a 4-bit signal to be outputted as the selection control signal Ss. Inversely, the input IN11[0] and the input IN12[2:0] may be put into a 4-bit signal to be outputted as the selection control signal Ss. Further, the bit width of the selection control signal Ss is not limited to 2 bits. The bit width of the selection control signal Ss may be determined in accordance with the number in a prescribed output form.

For facilitating understanding, it is assumed in the explanations of this embodiment that there are two inputs for each of the first selector 1 and the second selector 2. However, the number of inputs is not limited to that. In a case where there are three or more inputs, the total bit number extracted tram each input needs to be equal to or less than the bit width of the ALU 4. As long as this condition is satisfied, combinations of the arbitrary number of inputs and the output forms (arrangement of the bits) can be determined.

The structure of the present invention will be described in generalities. The input number and the output number of the first selector 1 and the second selector 2 are assumed to be input number K and input number 1 (K is a natural number of 2 or more) . Further, the number of bits handled by the ALU 4 is assumed to be N bits (N is a natural number of 2 or more) . The first selector 1 and the second selector 2 perform following output control based on the selection control signal Ss. That is, the first selector 1 and the second selector 2 rearrange a prescribed M[i] bit (M[i] is an integer that satisfies $\Sigma_{i=1}^{K}M[i] \leqq N$) of the i-th input (i is an integer that satisfies $i \leqq K$) in a predetermined order, and output the rearranged input. Further, the first selector 1 and the second selector 2 divide the input bit width N of the ALU 4 into K pieces. Provided that the K pieces of the bits are M[1], M[2], --- M[K], respectively, the following applies.

$$M[1]+ M[2]+ --- M[K] \leqq N$$

In other words, it can be expressed as follows.

$$\Sigma_{i=1}^{K}M[i] \leqq N$$

For example, provided that K = 2 and N = 4 as described above, the following becomes a conditional expression.

$$M[1]+ M[2] \leqq 4$$

Specifically, following combinations are available in the respective cases.

- When the above conditional expression is satisfied with $1+3 \leqq 4 \rightarrow$ a combination of 1 bit and 3 bits (irrespective of order)
- When the above conditional expression is satisfied with $1+2 \leqq 4 \rightarrow$ a combination of 1 bit and 2 bits (irrespective of order)
- When the above conditional expression is satisfied with $1+1 \leqq 4 \rightarrow$ a combination of 1 bit and 1 bit (irrespective of order)
- When the above conditional expression is satisfied with $2+2 \leqq 4 \rightarrow$ a combination of 2 bits and 2 bits (irrespective of order)

Further, for example, provided that K = 3 and N = 8 as described above, the following becomes a conditional expression.

$$M[1]+ M[2]+M[3] \leqq 8$$

Specifically, following combinations are available in the respective cases.

- When the above conditional expression is satisfied with 1+1 +6 ≦ 8 → a combination of 1 bit, 1 bit, and 6 bits (irrespective of order)
- When the above conditional expression is satisfied with 1+1+5 ≦ 8 → a combination of 1 bit; 1 bit , and 5 bits (irrespective of order)
- When the above conditional expression is satisfied with 1+1+4 ≦ 8 → a combination of 1 bit, 1 bit, and 4 bits (irrespective of order)
- When the above conditional expression is satisfied with 1+1+3 ≦ 8 → a combination of 1 bit, 1 bit, and 3 bits (irrespective of order)
- When the above conditional expression is satisfied with 1+1+2 ≦ 8 → a combination of 1 bit, 1 bit, and 2 bits (irrespective of order)
- When the above conditional expression is satisfied with 1+1+1 ≦ 8 → a combination of 1 bit, 1 bit, and 1 bit (irrespective of order)
- When the above conditional expression is satisfied with 1+2+5 ≦ 8 → a combination of 1 bit ; 2 bits ; and 5 bits (irrespective of order)
- When the above conditional expression is satisfied with 1+2+4 ≦ 8 → a combination of 1 bit, 2 bits, and 4 bits (irrespective of order)
- When the above conditional expression is satisfied with 1+2+3 ≦ 8 → a combination of 1 bit, 2 bits, and 3 bits (irrespective of order)
- When the above conditional expression is satisfied with 1+2+2 ≦ 8 → a combination of 1 bit, 2 bits, and 2 bits (irrespective of order)
- When the above conditional expression is satisfied with 1+3+4 ≦ 8 → a combination of 1 bit, 3 bits, and 4 bits (irrespective of order)
- When the above conditional expression is satisfied with 1+3+3 ≦ 8 → a combination of 1 bit, 3 bits, and 3 bits (irrespective of order)
- When the above conditional expression is satisfied with 2+2+4 ≦ 8 → a combination of 2 bits, 2 bits, and 4 bits (irrespective of order)
- When the above conditional expression is satisfied with 2+2+3 ≦ 8 → a combination of 2 bits, 2 bits , and 3 bits (irrespective of order)
- When the above conditional expression is satisfied with 2+2+2 ≦ 8 → a combination of 2 bits, 2 bits, and 2 bits (irrespective of order)
- When the above conditional expression is satisfied with 2+3+3 ≦ 8 → a combination of 2 bit, 3 bits, and 3 bits (irrespective of order)

The first selector 1 and the second selector 2 fetch K-pieces of input data with the combination of the prescribed number of bits and send the data to the ALU 4 . The ALU 4 that is capable of inputting data of N-bit width can accept K-pieces of input data (from M[1] bit to M[K] bit) for the logic operations. Therefore, it is possible to execute the separate logic operations of each of the K-pieces of input data by using a single ALU 4. This makes it possible to reduce the number of ALUs so as to reduce the circuit area. For facilitating understanding, it is assumed in the above explanations that the first selector 1 and the second selector 2 each fetch the same number (K-pieces) of input data and send the data to the ALU 4n. However, each selector may fetch different pieces of input data through applying necessary modifications. Further, when necessary, the selection control signal Ss may take different values to be inputted to the first selector 1 and the second selector 2, respectively. Similarly, the connection control signal Sc may also take different values to be inputted to the first connector 21 and the second connector 22, respectively.

(SECOND EMBODIMENT)

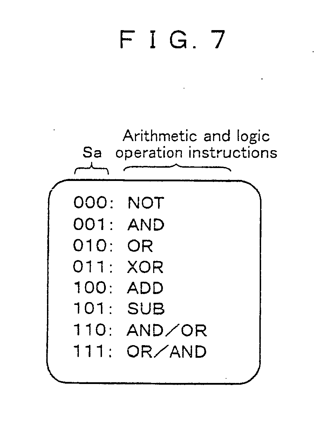

A reconfigurable circuit according to a second embodiment is different from the reconfigurable circuit according to the first embodiment in respect that it is additionally provided with, as a function of the ALU 4, instructions for plural kinds of logic operations whose logic operations performed on a higher-side bit and a lower-side bit are different from each other, as shown in FIG. 7. Other structures and actions are the same as the case of the first embodiment.
For facilitating understanding, it is assumed as follows.

- The bit width that can be inputted to the ALU 4 is 4 bits.
- The ALU 4 is capable of executing plural kinds of logic operations whose logic operations performed on upper-half bits (2 high order bits) and lower-half bits (2 low order bits) are different from each other.

However, it is noted that the embodiment can be achieved as well with other combinations (for example, upper 3 bits and lower 1 bit, or upper 1 bit and lower 3 bits) by making necessary modifications.

As shown in FIG. 7, when the ALU of this embodiment receives a 3-bit ALU control signal Ss constituted with "110", it is reconfigured to be capable of performing AND/OR instructions (specifically, AND operation is executed by the higher 2 bits and OR operation is executed by the lower 2 bits) . Further, when receiving the ALU control signal Sa that is constituted with "111", the ALU 4 is reconfigured to be capable of performing OR/AND instructions (specifically, OR operation is executed by the higher 2 bits and AND operation is executed by the lower 2 bits).

By having the functions described above, it is possible with the embodiment to perform distribution of logic operations and setting of wiring within the cell so as to achieve the following operations expressed by the two expressions, for example, by a single ALU 4 . For facilitating understanding, it is assumed in the following explanations that a' , b' , c', d', e', and f' are each 1 bit.

$$c' = a' \And b' \quad \text{--- (AND operation of a' and b')}$$

$$f' = d' \mid e' \quad \text{--- (OR operation of d' and e')}$$

In this case, the processing where a, b, c, and d are replaced with a', b', c', and d', respectively is the same as that of the first embodiment, also the processing where the selection controller 3 outputs "01" as the selection control signal Ss is the same as that of the first embodiment. However, the ALU controller 4 outputs "110" as the ALU control signal Sa.

The ALU 4 that has received "110" as the ALU control signal Sa is reconfigured as an AND/OR circuit. As a result, the ALU 4 executes AND operation of the selection result SE1[3:2] and the selection result SE2[3:2], and OR operation of the selection result SE1[1:0] and the selection result SE2[1:0]. Then, the ALU 4 outputs the output OUT[3:0] to the output bus B30. That is, an operation result c' is outputted to the bit 2 of the output, and an operation result f' is outputted to the bit 0 of the output.

In this manner, a single ALU 4 can perform operations even if the operations are plural kinds of logic operations which are different from each other at two sections.

While this embodiment is described by using the AND/OR instruction and OR/AND instruction as new instructions for the ALU 4, other combinations of logic operation instructions can also be employed. Further, it is also possible to perform plural kinds of logic operations that are different from each other at every bit.

(THIRD EMBODIMENT)

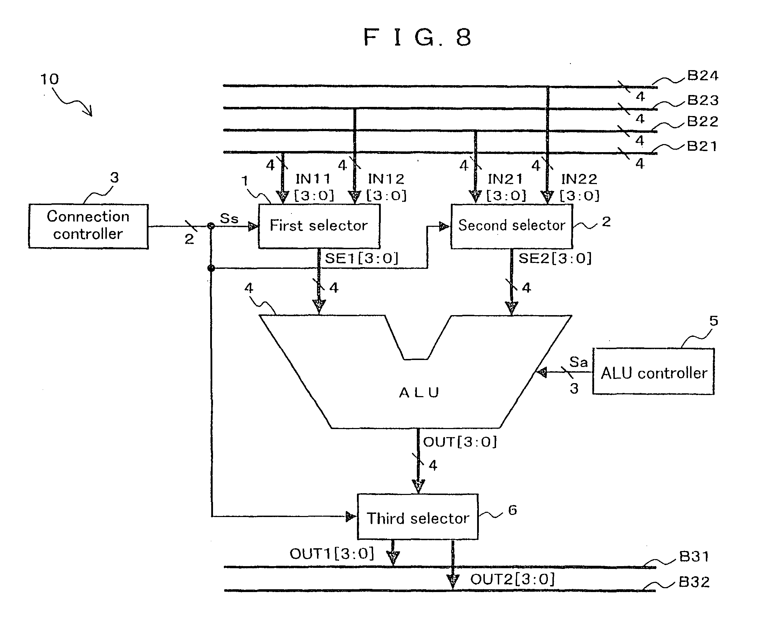

FIG. 8 is a block diagram showing a structure of a cell of a reconfigurable circuit according to a third embodiment of the present invention. The structure of the cell 10 of the reconfigurable circuit shown in FIG. 8 is different from that of the first embodiment shown in FIG. 4 in respect that: a third selector 6 is provided in the output stage of the ALU 4; there are two buses B30 of FIG. 4 provided in this embodiment; and a first output bus B31 and a second output bus B32 are provided. However, other structures and actions are the same as the case of the first embodiment.

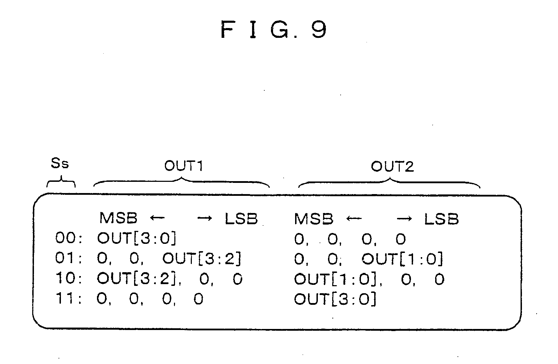

The output OUT[3:0] of the ALU 4 and the selection control signal Ss are inputted to the third selector 6. The third selector 6 generates a first output OUT1 and a second output OUT2 in output forms as shown in FIG. 9 based on the value of the selection control signal Ss.

For example, there is considered a case where the first out OUT1 is [3:0]. With this, the following actions are performed in the respective cases.

-    When the selection control signal Ss is "00"', the output OUT[3:0] is outputted as it is.
-    When the selection control signal Ss is "01", there is generated and outputted 4-bit data in which zero ("00") is put into the upper-half (upper 2 bits) and the output OUT[3:2] is put into the lower-half(lower 2 bits), respectively.
-    When the selection control signal Ss is "10", there is generated and outputted 4-bit data in which the output OUT [3:2] is put into the upper-half (upper 2 bits) and zero ("00") is put into the lower-half (lower 2 bits), respectively.
-    When the selection control signal Ss is "11" , 4-bi t data with zero for all 4 bits ("0000") is outputted.

Next, there is considered a case where the second output OUT2 is [3:0]. With this, the following actions are performed in the respective cases.

-    When the selection control signal Ss is "00", 4-bit data with zero for all 4 bits ("0000") is outputted.
-    When the selection control signal Ss is "01", there is generated and outputted 4-bit data in which zero ("00") is put into the upper-half (upper 2 bits) and the output OUT [1:0] is put into the lewer-half (lower 2 bits), respectively.

- When the selection control signal Ss is "10" , there is generated and outputted 4-bit data in which the output OUT [1:0] is put into the upper-half (upper 2 bits) and zero ("00") is put into the lower-half (lower 2 bits), respectively.
- When the selection control signal Ss is "11", the output OUT[3:0] is outputted as it is.

The first output OUT1[3:0] is outputted to the outside of the cell 10 (reconfigurable circuit) via the first output bus B31, and the second output OUT2[3:0] is outputted to the outside of the cell 10 via the second output bus B32.

With the above-described actions, there is no change in the bit positions of the cell in the input and output even if the logic operations are performed at two sections by a single ALU 4 . Thereby, there is no complication caused due to a change in the bit positions after the operations. Therefore, the circuit can be simplified further , thereby enabling the circuit area to be reduced.

For facilitating understanding, it is assumed in the explanations of this embodiment that the third selector 6 has two outputs, i.e, the first output bus B31 and the second output bus B32. However, the number of the outputs are not limited to two. It is possible to determine combinations of the arbitrary number of outputs and output forms (arrangement of the bits). Further, the selection control signal Ss may be provided separately so as to be used exclusively for the third selector 6.

(FOURTH EMBODIMENT)

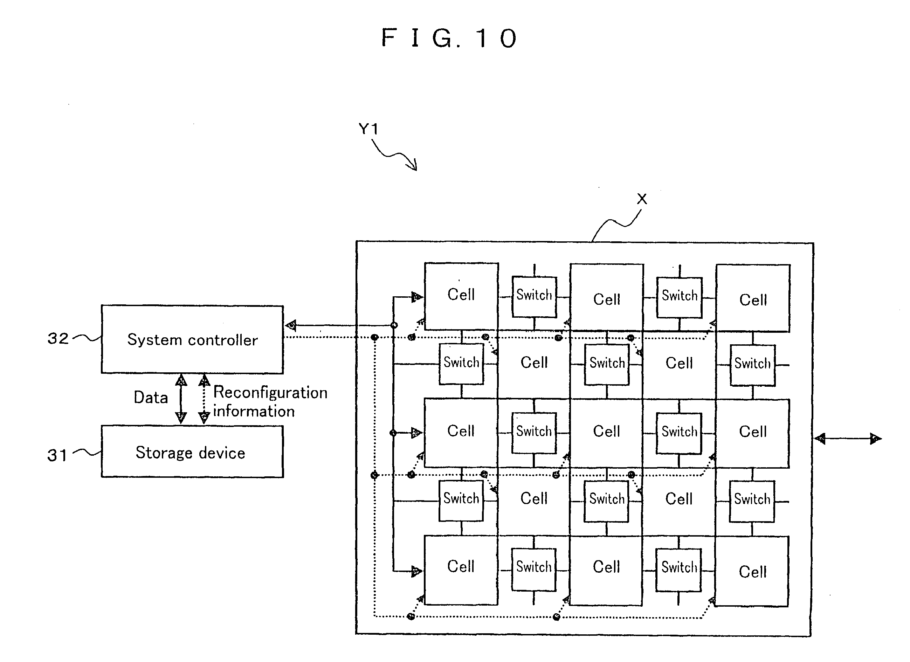

FIG. 10 shows a structure of a reconfigurable circuit system according to a fourth embodiment of the present invention. The reconfigurable circuit system Y1 shown in FIG. 10 comprises a storage device 31, a system controller 32, and a reconfigurable circuit X. As the reconfigurable circuit X, any of those described in the first to third embodiments can be employed. Dotted lines shown in FIG. 10 indicate flows of the signals for reconfiguring the reconfigurable circuit, i.e. flows of the so-called reconfiguration information (configuration code). Solid lines indicate fl ows of data to be processed with the application. The reconfiguration information is the connection control signal Sc, the selection control signal Ss, and the ALU control signal Sa described above.

The storage device 31 has the reconfiguration information for mounting a prescribed application to the reconfigurable circuit X stored in advance. The system controller 32 reads out the reconfiguration information from a prescribed place of the storage device 31, and reconfigures the reconfigurable circuit X. Thereby, the application is executed.

Then, the system controller 32 reads out the data accumulated in the storage device 31, and inputs it to the reconfigurable circuit X. The reconfigurable circuit X performs prescribed processing on the supplied data, and then outputs the processed data to the system controller 32 or to the outside.

The reconfigurable circuit system Y1 according to this embodiment is constituted with one of the reconfigurable circuits X of the first - third embodiments, so that the number of the ALUs 4 required for reconfiguring the application can be reduced. As a result, it is possible to obtain a low-price reconfigurable circuit having a small circuit area as a whole.

A desirable form of the storage device 31 is a ROM (Read Only Memory), a RAM (Random Access Memory), a FLASH memory, or the like. Further, a desirable form of the system controller 32 is a microprocessor or the like.

(FIFTH EMBODIMENT)

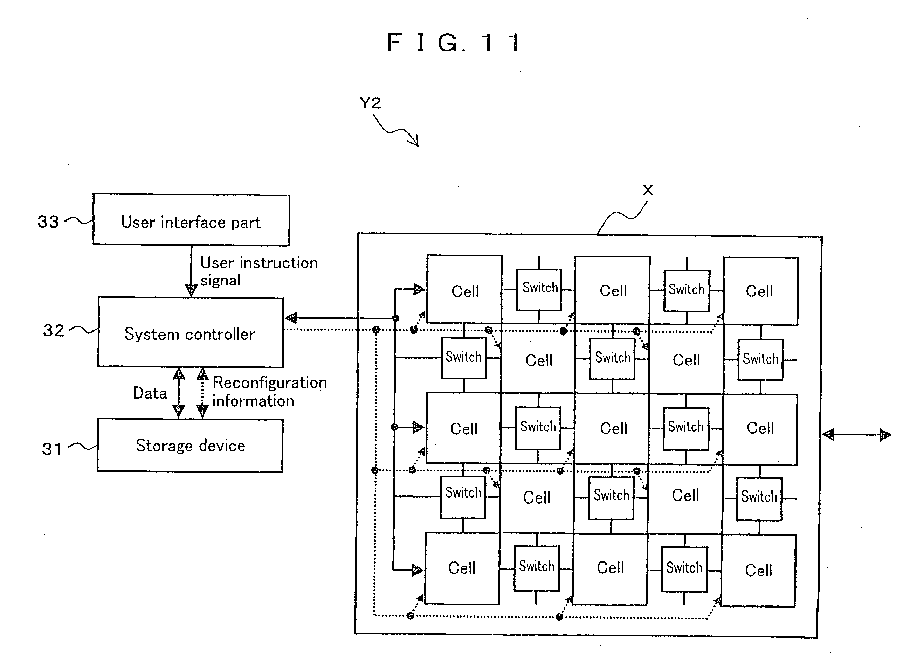

FIG. 11 is a block diagram showing a structure of a reconfigurable circuit system according to a fifth embodiment of the present invention. The reconfigurable circuit Y2 of this embodiment is different from that of the fourth embodiment (FIG. 10) in respect that it comprises a user interface part 33. Other structures and actions are the same as the case of the fourth embodiment.

The user interface part 33 obtains a user instruction signal by being directly operated by a user or obtains a user instruction signal indirectly, and then inputs the user instruction signal to the system controller 32.

Then, the system controller 32 performs prescribed processing according to the user instruction signal, selects the optimum application, reads the reconfiguration information that corresponds to the application, and reconfigures the reconfigurable circuit X.

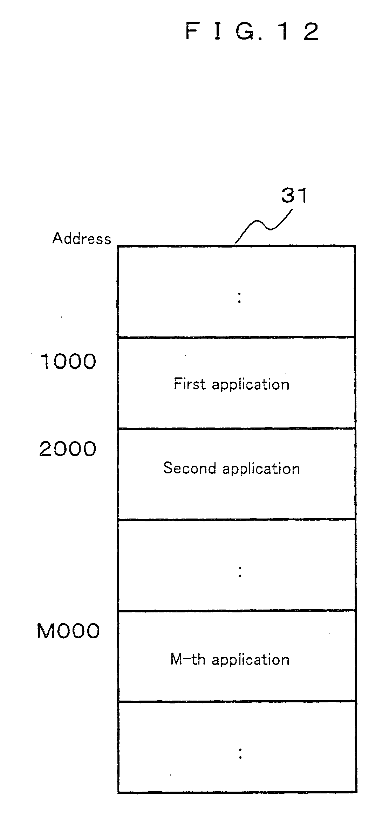

For example, as shown in FIG. 12, it is assumed that reconfiguration information corresponding to a plurality of applications, i.e. applications from a first application to an M-th application (M is a natural number), are accumulated in the storage device 31 in advance. When the user instruction signal indicates "M", the system controller 32 presumes that the M-th application is to be reconfigured. Thus, the system controller 32 reads out the reconfiguration information from M000 address and reconfigures the reconfigurable circuit X.

By providing the user interface part 33, the reconfigurable circuit system Y2 of this embodiment can select the optimum application according to the user instruction signal in this manner.

The embodiment is described for a case where a single application is selected from a plurality of applications. However, the present embodiment is not limited to such case. A plurality of algorithms or modules on the same application may be selected.

A desirable form of the user interface part 33 is an interface part that is constituted not only with a keyboard, a numeric keypad, a touch sensor, various buttons, or various switches, which can be operated directly by a user, but also with various sensing devices which can be operated indirectly by a user, such as CCDs (Charge Coupled Devices), a CMOS sensor, an infrared sensor, a face detection sensor, and a temperature sensor.

(SIXTH EMBODIMENT)

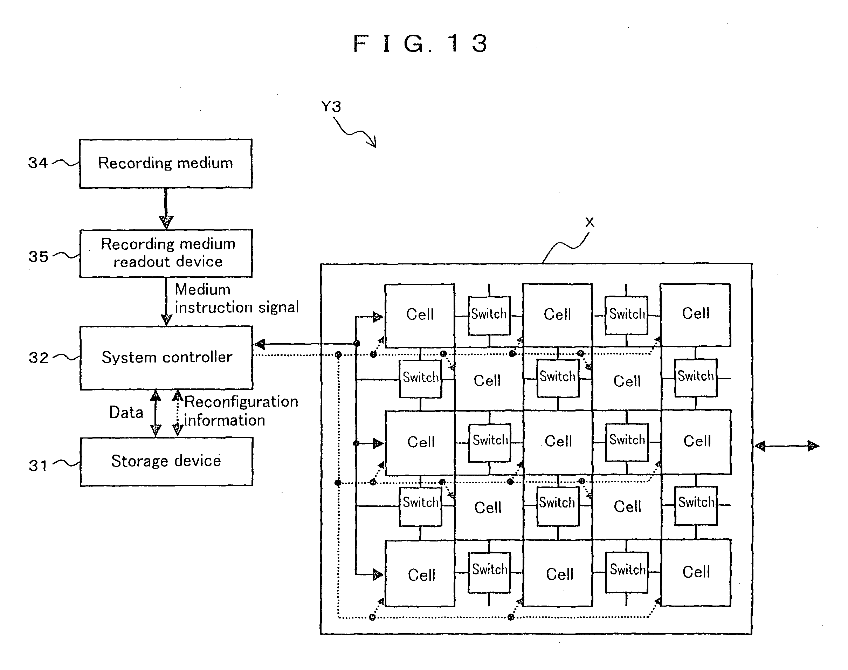

FIG. 13 is a block diagram showing a structure of a reconfigurable circuit system according to a sixth embodiment of the present invention. The reconfigurable circuit Y3 of this embodiment is different from that of the fourth embodiment (FIG. 10) in respect that it comprises a recording medium 34 and a recording medium readout device 35. Other structures and actions are the same as the case of the fourth embodiment.

Various kinds of contents information such as music information and video information as well as reconfiguration information of the optimum application for processing the contents information are accumulated in the recording medium 34. The reconfiguration information is the connection control signal Sc, the selection control signal Ss, and the ALU control signal Sa described above.

The recording medium readout device 35 reads out the contents information and the reconfiguration information from the recording medium 34, and inputs the information to the system controller 32. Then, the system controller 32 stores at least the contents information to the storage device 31 as data, and reconfigures the reconfigurable circuit X based on the reconfiguration information.

By providing the recording medium 34 and the recording medium readout device 35, the reconfigurable circuit system Y3 of this embodiment can select and implement the optimum application for processing contents information.

A desirable form of the recording medium 34 is a CD (Compact Disc), a DVD (Digital Versatile Disc), a BD (Blue-ray Disc), an HD-DVD (High Definition DVD), an SD memory card (Secure Digital memory card), or the like. A desirable form of the recording medium readout device 35 is a one of various kinds of drives that corresponds to the recording medium 34, such as a CD drive, a DVD drive, a BD drive, an HD-DVD drive, an SD memory card drive, or a device that is constituted with a multi-drive that corresponds to a plurality of kinds of recording media.

(SEVENTH EMBODIMENT)

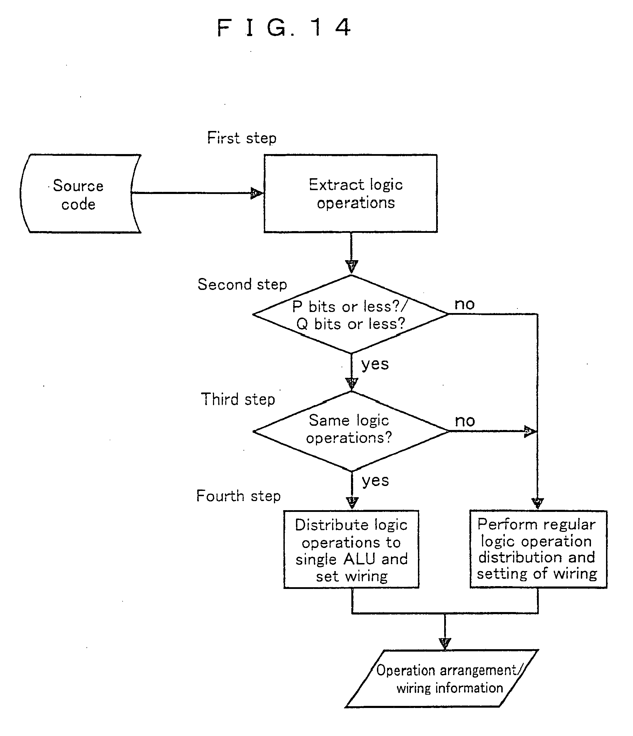

FIG. 14 is a flowchart showing a reconfigurable circuit setting method according to a seventh embodiment of the present invention. The reconfigurable circuit setting method shown in FIG. 14 is constituted with four steps. The method illustrated with this flowchart is executed in advance by a calculator (not shown).

In a first step, a source code including circuit information of an application is supplied to a calculator (not shown), and logic operation sections in the source code are extracted. In a second step, a section performing a logic operation of P bits (P is a natural number) or less and a section performing logic operation of Q bits (Q is a natural number) or less are searched for from the plurality of extracted logic operation sections. When no corresponding section or only one section is found as a result, the procedure is jumped to a fourth step where regular distribution of logic operations and wiring setting are performed.

In a third step, it is judged whether or not the logic operation instruction at the searched section with the logic operation of P bit or less and the logic operation instruction at the section with the logic operation of Q bit or less are the same logic operations. If it is judged as a result that those are a plurality of kinds of logic operations that are different from each other, the procedure is jumped to the fourth step where regular distribution of logic operations and wiring setting are performed.

In the fourth step, the logic operation instruction at the section with the logic operation of P bits or less and the logic operation instruction at the section with the logic operation of Q bits or less, which section have been searched and judged, are subjected to the processing of "distributing the logic operations to a single ALU and setting the wiring". Further, processing of "performing regular distribution of logic operations and setting of the wiring" is executed on the logic operation portions that do not satisfy the condition in the second step or the third step. The logic operation distribution/wiring information obtained in the above-described manner is outputted. Note here that the ALU 4 has inputs of R-bit width (R is a natural number that satisfies R≧P+Q).

With this embodiment, the P-bit logic operation and the Q-bit logic operation can be arranged in a single ALU. Thereby, the number of the ALUs can be decreased, so that the circuit area can be reduced. In this embodiment, a distinction is made between P and Q for the purpose of providing a general explanation. However, P and Q may take the same value as long as the sum of P and Q becomes equal to or less than the bit width of the ALU 4.

(EIGHTH EMBODIMENT)

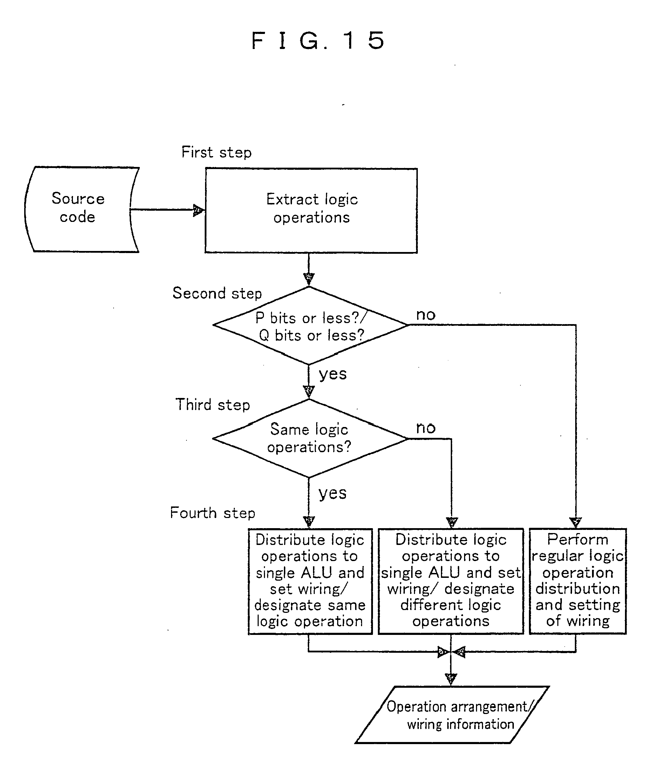

FIG. 15 is a flowchart showing a reconfigurable circuit setting method according to an eighth embodiment of the present invention. The reconfigurable circuit setting method of this embodiment is different from that of the seventh embodiment (FIG. 14) in respect that processing is added in the fourth step for a case where it is judged in the third step that the condition is not met. Other structures and actions are the same as the case of the seventh embodiment.

The fourth step performs processing of distributing the logic operation instruction at the section with the logic operation of P bits or less and the logic operation instruction at the section with the logic operation of Q bits or less, which sections have been searched and judged, to a single ALU 4, and setting the wiring thereof. Further, when it is judged in the third step that the condition is met, an instruction for performing a single-kind logic operation is designated as an instruction to be executed by a corresponding ALU 4. Meanwhile, if is judged that the conditions are not met, designated is an instruction for performing plural kinds of logic operations that are different from each other at the higher bit and lower bit of ALU 4.

In this manner, it is possible with the reconfigurable circuit setting method of this embodiment to perform more efficient distribution of logic operations and wiring setting through adding the processing in the fourth step to be performed when it is judged in the third step that the condition is not met. With this, the number of ALUs 4 can be decreased further so as to reduce the circuit area.

For facilitating easy understanding, this embodiment is described by referring to the case of distributing logic operations at two sections to a single ALU 4 from the second step to the forth step. However, the embodiment can also be applied to a case of three logic operations by making necessary modifications.

(NINTH EMBODIMENT)

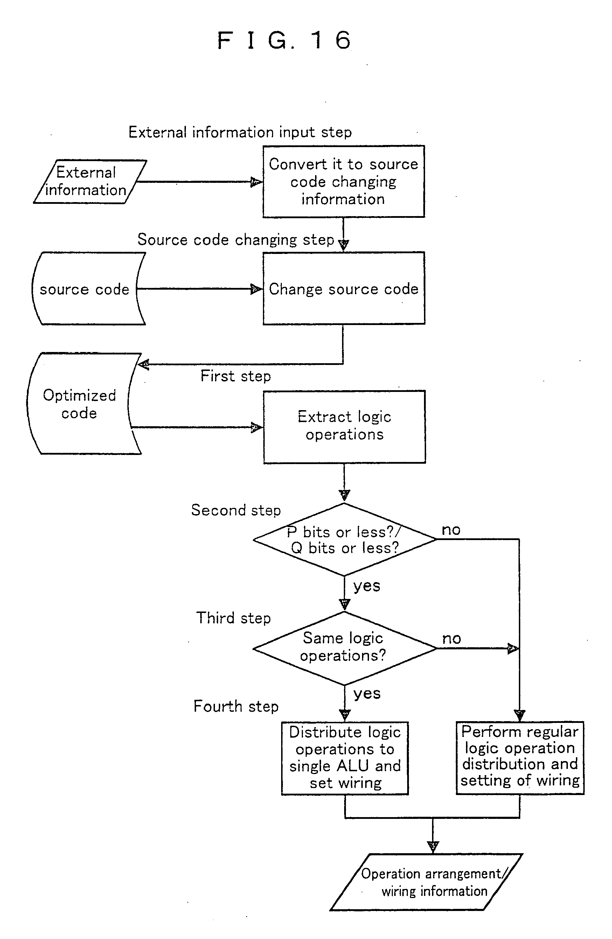

FIG. 16 is a flowchart showing a reconfigurable circuit setting method according to a ninth embodiment of the present invention. The reconfigurable circuit setting method of this embodiment is different from that of the seventh embodiment (FIG. 14) in respect that an external information input step and a source code changing step are provided in a preceding stage of the first step. Other structures and actions are the same as the case of the seventh embodiment.

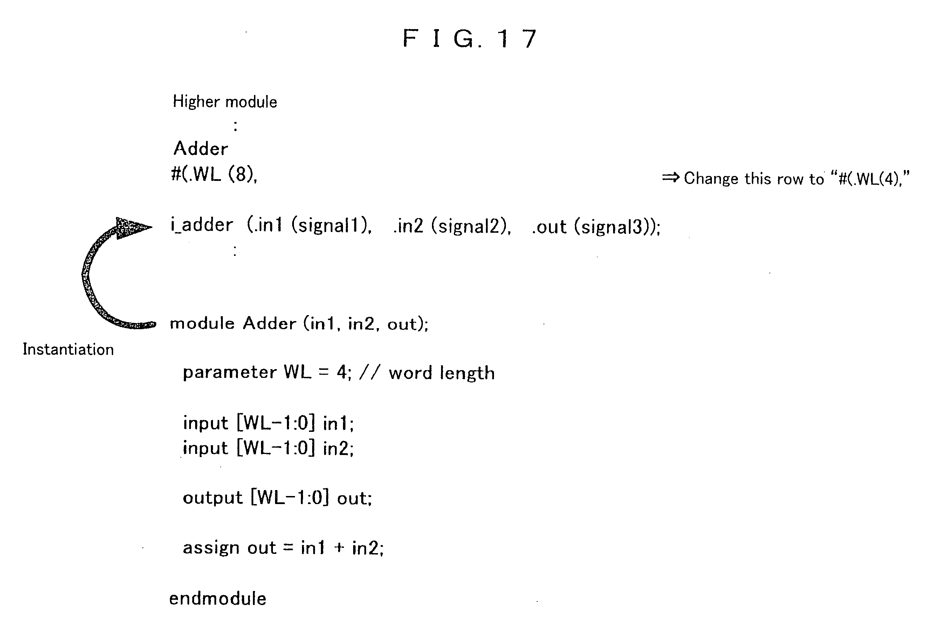

For example, there is considered a state where a higher module sets the parameter as "#(.WL(8)," so that an "adder" module set as a 4-bit adder as a source code in an initial state that is shown in FIG. 17 is instantiated as an 8-bit adder. In this state, the reconfigurable circuit performs distribution of the logic operations and wiring setting by considering the above-described "adder" module as the 8-bit adder.

In the external information input step, the application is more optimized based on the external information obtained through the user interface part 33 or the like. Thus, source code changing information is generated, at a prescribed section of the source code. For example, when judged that it is sufficient for the bit precision of the adder to be 4-bit precision based, on the external information, the source code changing information is generated so that that row is replaced with "#(.WL(4),". For example, if it is the tenth row, the source code changing information is set to "10: #(.WL(4)".

In the source code changing step , the prescribed position of the source code is changed based on the source code changing information. Then, the optimum code is generated, and the procedure of the first step and thereafter is executed by using it as a new source code.

For example, when "10:#(.WL(4)" is inputted as the source code changing information, the tenth row of the source code is replaced with "#(.WL(4)" in the source code changing step.

In this manner, it is possible with the reconfigurable circuit setting method of this embodiment to achieve the application circuit that is optimum to the external information by performing more efficient distribution of logic operations and wiring setting through adding the external information input step and the source code changing step.

This embodiment is described for facilitating understanding by referring to a case where the bit number of the parameter is taken as the change target. However, the present embodiment is not limited to such case. The entire algorithm may be considered as the change target.

(TENTH EMBODIMENT)

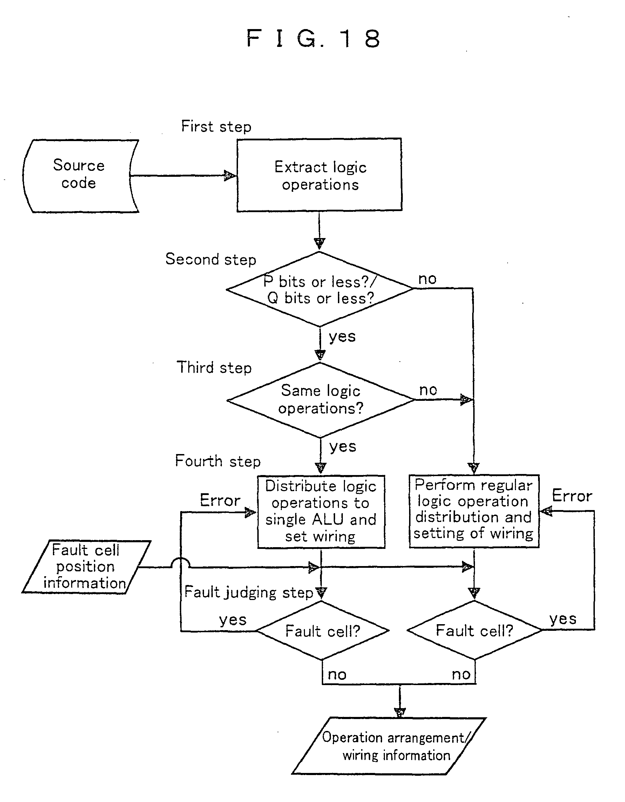

FIG. 18 is a flowchart showing a reconfigurable circuit setting method according to a tenth embodiment of the present invention. The reconfigurable circuit setting method of this embodiment is different from that of the seventh embodiment (FIG. 14) in respect that a fault judging step is provided in a latter stage of the fourth step. Other structures and actions are the same as the case of the seventh embodiment.

In the fault judging step, fault cell position information that indicates the position of a fault cell in the reconfigurable circuit is inputted in advance. Then, the fault cell position information is collated with "position information of the cell where the logic operations are distributed" that is provided as a result of the processing performed in the fourth step.

When found as a result of the collation that both the positions are consistent, it is judged that the logic operations are distributed to the fault sell. Upon such judgment made, an error (Error) is fed back so that the fourth step is performed again. When found as a result of the collation that both the positions are inconsistent, it is judged that the logic operations are not distributed to the fault cell. Upon such judgment made, the result of the processing performed in the fourth step is outputted as the final logic operation distribution/wiring setting information.

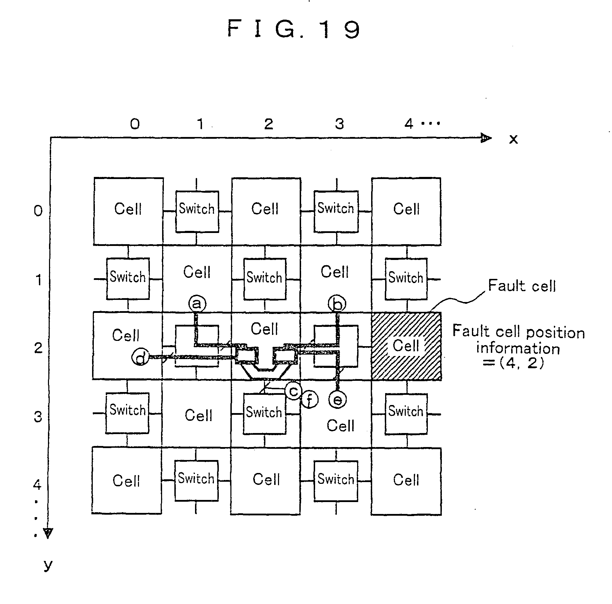

FIG. 19 shows an example of the fault cell position information expressed in a two-dimensional form with x-axis and y-axis. When the cell at the position-of x = 4 and y = 2 has a fault, the fault cell position information is expressed as "(4,2)". In this state, when the logic operations are distributed to the cell at (4,2) and the wiring thereof is set, the fault judging step returns Error to the fourth step.

Upon receiving Error , the fourth step again performs logic operation distribution/wiring setting processing by using a cell other than the cell of (4,2) . In this example , described is a case of selecting the cell of (3,3) instead. With this, it is judged in the fault judging step that the logic operations are not distributed to the fault cell. Upon such judgment made , the result of the processing performed in the fourth step is outputted as the final logic operation distribution/wiring setting information.

With the reconfigurable circuit setting method of this embodiment, the yields can be improved by preventing the logic operations from being distributed to the fault cell in the above-described manner through providing the fault judging step. Therefore, the reconfigurable circuit of a still lower price can be provided.

(ELEVENTH EMBODIMENT)

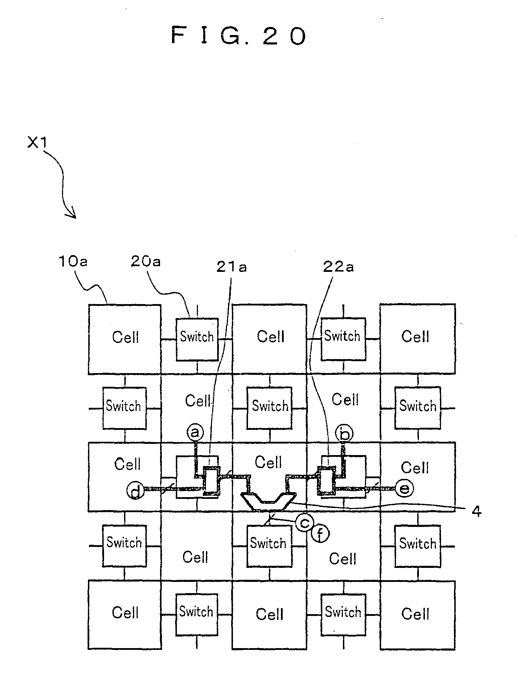

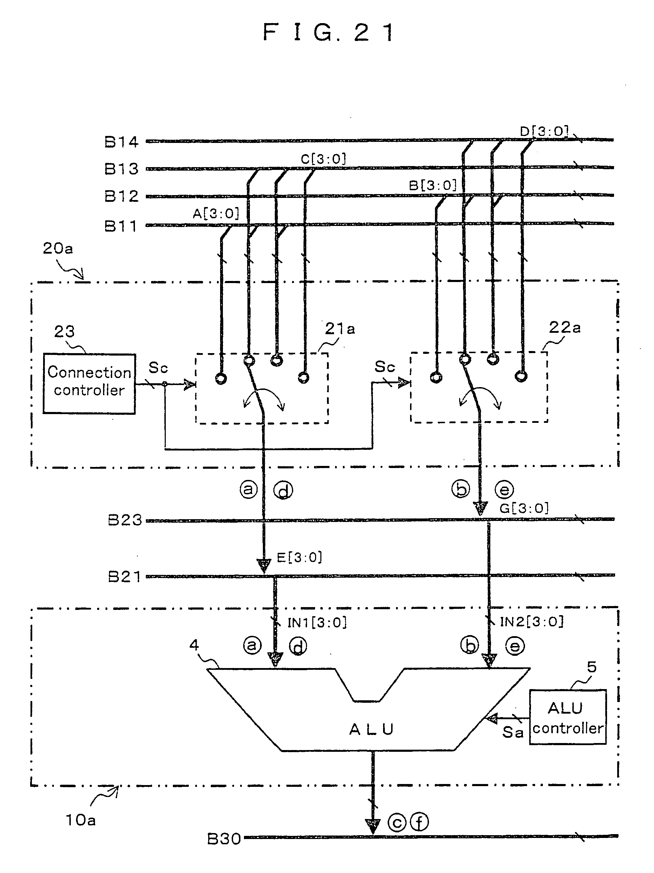

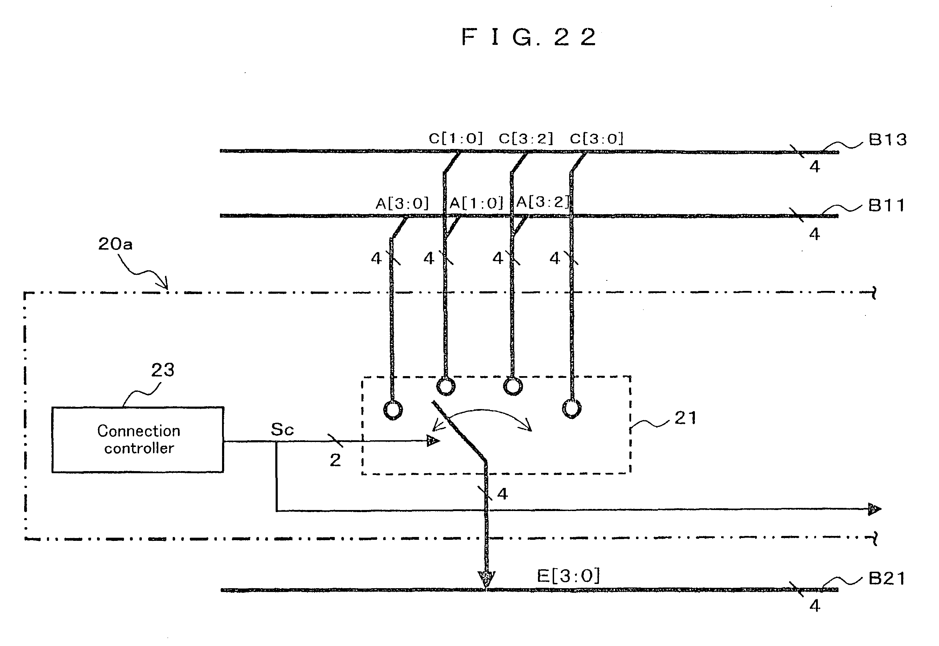

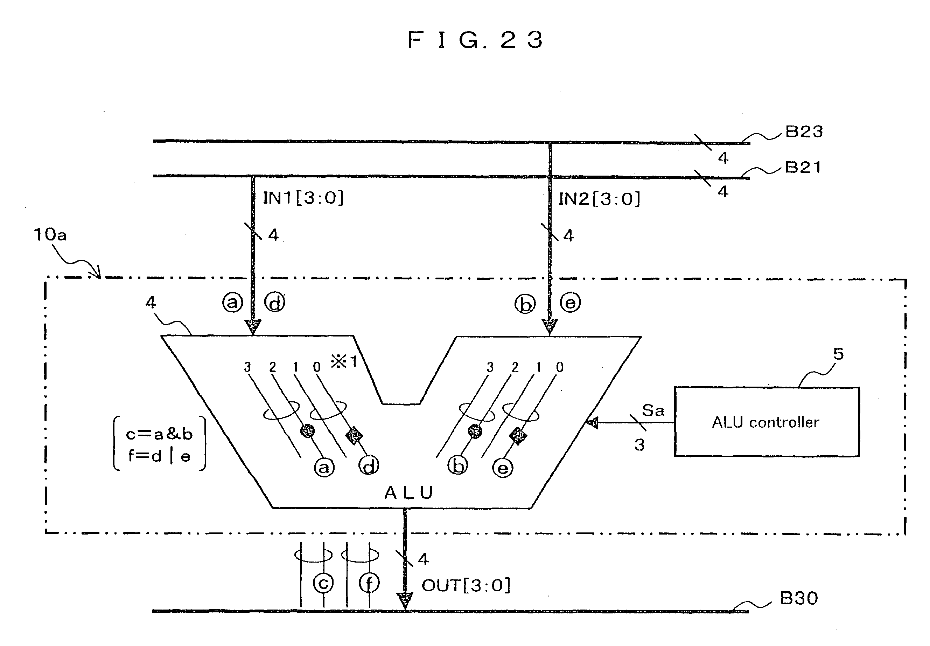

FIG. 20 is a block diagram showing a structure of a reconfigurable circuit X1 according to an eleventh embodiment of the present invention, FIG. 21 is a block diagram showing a structure of a main part of the reconfigurable circuit X1, FIG. 22 is a block diagram showing a structure of a switch 20a that is connected to a cell 10a of the reconfigurable circuit, and FIG. 23 is a block diagram showing a structure of the cell 10a of the reconfigurable circuit.

The cell 10a of the reconfigurable circuit shown in FIG. 23 is arranged in matrix in the reconfigurable circuit X1 of FIG. 20. Further, the switch 20a shown in FIG. 22 is arranged in matrix between the neighboring cells 10a in the reconfigurable circuit X1 of FIG. 20.

In the reconfigurable circuit X 1 shown in FIG. 20, a plurality of the cells 10a and a plurality of the switches 20a are arranged alternately in both horizontal and vertical directions to be in a matrix form. Each of the cells 10a comprises an ALU 4 as a base element. Further, each of the switches 20a comprises a first connector 21a and a second connector 22a as the base elements. With this, for example, the cell 10a outputting a signal a and the cell 10a outputting a signal d are connected to one of the inputs of the ALU 4 of the target cell 10a via the first connector 21a. Further, the cell 10a outputting a signal b and the cell 10a outputting a signal e are connected to the other input of the ALU 4 via the second connector 22a . In the target cell 10a , the ALU 4 performs a logic operation of the signal a supplied from the first connector 21a and the signal b supplied from the second connector 22a, and outputs an operation result c. Further, the ALU 4 performs a logic operation of the signal d supplied from the first connector 21a and the signal e supplied from the second connector 22a, and outputs an operation result f. At this time, the logic operation of the signal a and the signal b and the logic operation of the signal d and the signal e are performed by a single ALU 4. It is a technical feature of the present invention to perform the plurality of logic operations by a single ALU 4. In this embodiment, the first selector, the second selector, and the selection controller 3 of the cell 10 according to the first embodiment (FIG. 4) are not provided. Instead, the first connector 21a and the second connector 22a provided to the switch 20a perform the processing of putting bits together. The processing will be described more specifically by referring to FIG. 21 - FIG. 24.

The switch 20a comprises the first connector 21a, the second connector 22a, and a connection controller 23. Each of a bus B11 and a bus B13 transmits signals that are supplied from other cells. A signal A[3:0] supplied from the bus B11, a signal C[3:0] supplied from the bus B13, and a 2-bit connection control signal Sc supplied from the connection controller 23 are inputted to the first connector 21a. The first connector 21a selects a single output form from a plurality of output forms in which signals from prescribed positions are put into 4-bit data based on the value of the selection control signal Sc. Then, the first connector 21a fetches signals from the buses B11 and B13 based on the selected form, and outputs the fetched signals as E[3:0].

More specifically, the first connector 21a comprises first - fourth switching parts, and controls switching of the four states shown in the following via those switching parts. The switching control is performed based on the connection control signal Sc from the connection controller 23. The bus B21 outputs the output E[3:0] of the first connector 21a to the external cell.

(First Switching Control)

The first switching part performs connection/isolation between four bits [3:0] of the bus B11 and the bus B21.

(Second Switching Control)

The second switching part performs connection/isolation between two bits [l:0]ofthebusBll, and connection/ isolation between two bits [1:0] of the bus B13 and the bus B21.

(Third Switching Control)

The third switching part performs connection/isolation between two bits [3:2] of the bus B11 and connection/ isolation between two bits [3:2] of the bus B13 and the bus B21.

(Fourth Switching Control)

The fourth switching part performs connection/isolation between four bits [3:0] of the bus B13 and the bus B21.
For example, as shown in FIG. 24, following actions are performed.

- With the connection control signal Sc of "00", A[3:0] is outputted as it is.
- With the selection control signal Ss of "01", A[1:0] and C[1:0] are put together to generate and output 4-bit data.
- With the selection control signal Ss of "10", the input A[3:2] and the input C[3:2] are put together to generate and output 4-bit data.
- With the connection control signal Ss of "11", the input C[3:0] is outputted as it is.

Therefore, the bus B21 of the switch 20a transmits E[3:0] outputted from the first connector 21a as it is in the state of [3:0] to the input IN1 of the ALU 4. The second connector 22a has the same structure as that of the first connector 21a, so that the bus B23 corresponding to the second connector 22a transmits G[3:0] that is outputted from the second connector 22a as it is in the state of [3:0] to the input IN2 of the ALU 4.
The cell 10a of the reconfigurable circuit is constituted with the ALU 4 and the ALU controller 5. The ALU controller 5 outputs a 3-bit ALU control signal Sa for giving an instruction of the logic operation to be executed at the ALU 4.
The ALU 4 receives supplies of the input IN1[3:0] from the first connector 21a via the bus B21, the input IN2 [3:0] from the second connector 22a via the bus B23, and the ALU control signal Sa from the ALU controller 5, respectively. Upon receiving the supplies of those signals, the ALU 4 executes the logic operation that corresponds to the table of FIG. 7 based on the value of the ALU control signal Sa, and outputs the result of the operation to the output bus B30 as the output OUT [3:0] . The output bus B30 transmits the output OUT [3:0] to the outside of the cell 10a (the reconfigurable circuit).
Next, actions of the reconfigurable circuit X1 of this embodiment constituted in the manner described above will be described. Hereinafter, explanations are provided on an assumption that the reconfigurable circuit is constituted to have 4 bits as the operation bit width. However, it is noted that the embodiment can be achieved as well with other bit width by making necessary modifications . Described herein is a case of achieving the following two logic operations.

```
c = a & b   --- (AND operation of a and b)
```

```
f = d | e   --- (OR operation of d and e)
```

For facilitating understanding, it is assumed in the following explanations that a, b, c, d, e, and f are each 1 bit.
The reconfigurable circuit X1 finds sections that execute common logic operations among a plurality of logic operations in the application, put those with the operation bit width of 2 bits or less into a single piece of data to generate new 4-bit data, and performs a logic operation of the generated new data (4 bit). The logic operation is done by a single ALU 4.
The connection controller 2-3 outputs, to the first connector 21a and the second connector 22a, "01" as the 2-bit connection control signal Sc that indicates the output form. The first connector 21a that has received the connection control signal Sc of "01" puts together A[1:0] fetched from the bus B11 and C[1:0] fetched from the bus B13 to form new 4-bit data, and outputs the new generated 4-bit data. With this, the signal a is outputted to the bit 2 of E[3:0] and the signal d is outputted to the bit 0 of the E[3:0], respectively.
Similarly, the second connector 22a that has received the selection control signal Sc of "01" puts together B [1:0] fetched from the bus B12 and D[1:0] fetched from the bus 314 to form new 4-bit data, and outputs the new generated 4-bit data. With this, the signal b is outputted to the bit 2 of G [3:0] and the signal e is outputted to the bit 0 of the G [3: 0], respectively.

As described above, it is possible to execute the logic operations of two sections by a single ALU 4 so that, as shown in FIG. 20, two ALUs used conventionally can be reduced to a single ALU. By applying such operations to the entire application, the circuit area can be reduced. Furthermore, there are only five cells required with this embodiment, while at least six cells are required in the conventional case. At the same time, only two switches 20 are required, while four switches are required conventionally. Furthermore, a plurality or logic operations ran be executed with high efficiency.

For facilitating understanding, it is assumed in the explanation of this embodiment that a, b, c, d, e, and f are each 1 bit. However, the embodiment is not limited to such case. For example, a, b, and c may each be 1 bit, and d, e, and f may each be 2 bits. Inversely, a, b, and c may each be 2 bits, and d, e, and f may each be 1 bit. Further, a, b , c , d, e, and f may each be 2 bits.

The connection control signal Sc and the output form thereof are not limited to those shown in FIG. 24. For example, the A[2:0] and C [0] may be put together to generate 4-bit data, and the 4-bit data may be outputted. Inversely, A [0] and the C[2:0] may be put together to generate 4-bit data, and the 4-bit data may be outputted. Further, the bit width of the connection control signal Sc is not limited to 2 bits. The bit width of the connection control signal Sc maybe determined in accordance with the prescribed number of output forms.

For facilitating understanding, it is assumed in the explanations of this embodiment that the data supplied to the first connector 21a is the data transmitted via the two buses, i.e., the bus B11 and the Bus B13. However, the data is not limited only to that. The embodiments can be achieved also with a structure where the data transmitted via three or more buses is supplied to the first connector 21a. In that case, there is generated data in which the total number of bits extracted from each input becomes equal to or less than the bit width of the ALU 4. Then, combinations of the data and the arbitrary number of input/output forms (arrangement of the bits) may be determined.

For facilitating understanding, the cell 10a of this embodiment has the structure shown in FIG. 23. However, the third selector 6, the first output bus B31, the second output bus B32, and the selection controller 3 shown in FIG. 8 may be provided to adjust the bit positions of the ALU output. Further, for facilitating understanding, it is assumed in the explanations of the embodiment that the first connector 21a and the second connector 22a have the same number of inputs. However, each connector may fetch different pieces of input data through making necessary modifications. Further, when necessary, the connection control signal Sc may also take different values to be inputted to the first connector 21a and the second connector 22a, respectively.

The present invention has been described in detail by referring to the most preferred embodiments. However, various combinations and arrangements of the components are possible without departing from the spirit and the broad scope of the appended claims.

## Claims

1. A reconfigurable circuit, comprising a plurality of cells, buses, and connectors for connecting each of said cells to each other via a network of said buses, wherein each of said cell comprises
a first selector which accepts K-pieces (K is a natural number of 2 or more) of data, and then outputs a single piece of data;
a second selector which accepts K-pieces (K is a natural number of 2 or more) of data, and then outputs a single piece of data;
an arithmetic and logic unit which accepts output of said first selector and output of said second selector in N bits (N is a natural number of 2 or more), and performs a logic operation that is selected from a plurality of logic operations on accepted data of N bits;
a selection controller which supplies, to said first selector and said second selector, a data selection control signal for indicating data to be selected; and
an ALU controller which supplies, to said arithmetic and logic unit, an ALU control signal that designates said logic operation to be executed, wherein
said first selector, said second selector, and said arithmetic and logic unit are capable of reconfiguration based on said selection control signal and said ALU control signal; and
said first selector and said second selector rearrange M[i] bits of i-th data in a prescribed order based on said selection control signal, and output said rearranged data (i is a natural number that satisfies i$\leqq$K, and M[i] is an integer that satisfies $\Sigma_{i\equiv1}^{K}$M[i]$\leqq$N) .

2. The reconfigurable circuit according to claim 1, wherein said arithmetic and logic unit executes at least one kind of logic operation that is designated by said ALU control signal.

3. The reconfigurable circuit according to claim 1, wherein said arithmetic and logic unit is capable of executing plural kinds of logic operations that are different from each other at every bit.

4. The reconfigurable circuit according to claim 1, further comprising a third selector which accepts a single piece of data, and then outputs K' pieces (K' is a natural number of 2 or more) of data, wherein
said third selector is capable of reconfiguration based on said selection control signal; and
said third selector generates each output data by selecting a single combination based on said selection control signal from a plurality of output form combinations that are obtained as a result of operations executed by said arithmetic and logic unit.

5. A reconfigurable circuit system, comprising
said reconfigurable circuit according to claim 1;
a storage device which stores values of said selection control signal and values of said ALU control signal; and
a system controller which selects, from said storage, said selection control signal and said ALU control signal which are to be reconfigured, respectively, for processing a prescribed application, and supplies the selected signals to said reconfigurable circuit to reconfigure said plurality of cells.

6. The reconfigurable circuit system according to claim 5, further comprising a user interface part which outputs a user instruction signal by receiving an instruction from a user, wherein
said system controller reconfigures said plurality of cells for processing said application based on said user instruction signal.

7. The reconfigurable circuit system according to claim 5, further comprising a recording medium readout device which reads out recorded data from a recording medium and output a medium instruction signal, wherein
said system controller reconfigures said plurality of cells for processing said application based on said medium instruction signal.

8. A reconfigurable circuit setting method which, for executing each logic operation written in a source code in accordance with said source code, distributes said each logic operation to each arithmetic and logic unit of a reconfigurable circuit and sets wiring between each of said arithmetic and logic units, said method comprising
a first step for extracting said logic operations from said source codes;
a second step for judging whether or not said logic operations extracted in said first step are of P bits or less (P is a natural number) or of Q bits or less (Q is a natural number);
a third step for judging whether or not said logic operation of P bits or less is the same kind of operation as said logic operation of Q bits or less; and
a fourth step for performing distribution of said logic operations and setting of said wiring in such a manner that said logic operation of P bits or less and said logic operation of Q bits or less, which are judged in said third step as being the same kind of logic operations , can be executed by a single arithmetic and logic unit that can accept data of R-bit width (R is a natural number that satisfies $R \geqq P+Q$).

9. The reconfigurable circuit setting method according to claim 8, wherein, when judged in said third step that said logic operation of P bits or less and said logic operation of Q bits or less are of different kinds from each other, the distribution of said logic operations and the setting of said wirings are performed in said fourth step in such a manner that said different kinds of logic operations are executed on higher-side Q bits and lower-side P bits.

10. A reconfigurable circuit, comprising a plurality of cells, buses, connectors for connecting each of said cells to each other via a network of said buses, and a connection controller, wherein each of said cell comprises
an arithmetic and logic unit having an input port of N bits (N is a natural number of 2 or more) which performs a logic operation that is selected from a plurality of logic operations on N-bit data that is inputted from said input port; and
an ALU controller which supplies, to said arithmetic and logic unit, an ALU control signal that designates said logic operation to be executed, wherein
said connection controller supplies , to said connectors, a connection control signal for designating a connection form of said buses that are connected to each other via a network;
said arithmetic and logic unit is capable of reconfiguration based on said ALU control signal; and
K-number of said busses (K is a natural number of 2 or more), after prescribed M[i] bits of i- th bus are arranged in a prescribed order based on said connection control signal, are connected to said input port (i is a natural number that satisfies $i \leqq K$, and M[i] is an integer that satisfies $\Sigma_{i=1}^{K} M[i] \leqq N$ ) .

11. The reconfigurable circuit according to claim 10, wherein said arithmetic and logic unit executes at least one kind of logic operation that is designated by said ALU control signal.

12. The reconfigurable circuit according to claim 10, wherein said arithmetic and logic unit is capable of executing plural kinds of logic operations that are different from each other at every bit.

13. The reconfigurable circuit according to claim 10, further comprising a selector which accepts a single piece of data, and then outputs K' pieces (K' is a natural number of 2 or more) of data, wherein
said selector is capable of reconfiguration based on said selection control signal; and
said selector generates each output data by selecting a single combination based on said selection control signal from a plurality of output form combinations that are obtained as a result of operations executed by said arithmetic and logic unit.

14. A reconfigurable circuit system, comprising
said reconfigurable circuit according to claim 10;
a storage device which stores values of said selection control signal and values of said ALU control signal; and
a system controller which selects and reads out, from said storage, said selection control signal and said ALU control signal which are to be reconfigured, respectively, for processing a prescribed application, and supplies the selected signals to said reconfigurable circuit.

15. The reconfigurable circuit system according to claim 14, further comprising a user interface part which outputs a user instruction signal by receiving an instruction from a user, wherein
said system controller reconfigures said plurality of cells for processing said application based on said user instruction signal.

16. The reconfigurable circuit system according to claim 14, further comprising a recording medium readout device which reads out recorded data from a recording medium and output a medium instruction signal, wherein
said system controller reconfigures said plurality of cells for processing said application based on said medium instruction signal.

17. A reconfigurable circuit setting method which, for executing each logic operation written in a source code in accordance with said source code, distributes each of said logic operations to each arithmetic and logic unit of a reconfigurable circuit and sets wiring between each of said arithmetic and logic units, said method comprising
a first step for extracting said logic operations from said source codes;
a second step for judging whether or not said logic operations extracted in said first step are of P bits or less (P is a natural number) or of Q bits or less (Q is a natural number);
a third step for judging whether or not said logic operation of P bits or less is the same kind of operation as said logic operation of Q bits or less; and
a fourth step for performing distribution of said logic operations and setting of said wiring in such a manner that said logic operation of P bits or less and said logic operation of Q bits or less, which are judged in said third step as being the same kind of logic operations, can be executed by a single arithmetic and logic unit.

18. The reconfigurable circuit setting method according to claim 17 , wherein, when judged in said third step that said logic operation of P bits or less and said logic operation of Q bits or less are of different kinds from each other, the distribution of said logic operations and the setting of said wiring are performed in said fourth step in such a manner that said different kinds of logic operations are executed on higher-side Q bits and lower-side P bits.

19. The reconfigurable circuit setting method according to claim 8, further comprising
an external information input step for converting inputted external information into source code changing information; and
a source code changing step which changes a prescribed position of a source code based on said source code changing information, and outputs said source code that has been changed as a new source code.

20. The reconfigurable circuit setting method according to claim 17, further comprising
an external information input step for converting inputted external information into source code changing information; and
a source code changing step which changes a prescribed position of a source code based on said source code changing information, and outputs said source code that is being changed as a new source code.

**21.** The reconfigurable circuit setting method according to claim 8, further comprising a fault judging step which, upon reserving input of fault cell position information that indicates a position of a fault cell in said reconfigurable circuit, performs distribution of said logic operations and setting of said wiring again after excluding said fault cell.

**22.** The reconfigurable circuit setting method according to claim 17, further comprising a fault judging step which, upon receiving input of fault cell position information that indicates a position of a fault cell in said reconfigurable circuit, performs distribution of said logic operations and setting of said wiring again after excluding said fault cell.

# F I G. 1

# F I G. 2

# F I G . 3

ⓓ C[3:0]                                    B13
                                              4

ⓐ A[3:0]                                    B11
                                              4

20

4                    4

23

Connection
controller          Sc

2        21

4        4

ⓓ G[3:0]                                    B23
                                              4

ⓐ E[3:0]                                    B21
                                              4

ⓐ        ⓓ

1        First selector

SE1[3:0]
4

EP 1 970 791 A2

# FIG. 4

EP 1 970 791 A2

# F I G. 5

Ss                    SE1

```
    MSB   ←        → LSB
00:IN11[3:0]
01:IN11[1:0]、IN12[1:0]
10:IN11[3:2]、IN12[3:2]
11:IN12[3:0]
```

# F I G. 6

Sa    Arithmetic and logic
      operation instructions

```
000: NOT
001: AND
010: OR
011: XOR
100: ADD
101: SUB
```

# F I G. 7

Sa | Arithmetic and logic operation instructions

```
000:  NOT
001:  AND
010:  OR
011:  XOR
100:  ADD
101:  SUB
110:  AND/OR
111:  OR/AND
```

# F I G . 8

EP 1 970 791 A2

# F I G. 9

```
 Ss          OUT1                    OUT2
┌─┐  ┌──────────────────┐  ┌──────────────────┐
```

```
        MSB ←      → LSB    MSB ←      → LSB
  00:  OUT[3:0]              0,  0,  0,  0
  01:  0,  0,  OUT[3:2]      0,  0,  OUT[1:0]
  10:  OUT[3:2],  0,  0      OUT[1:0],  0,  0
  11:  0,  0,  0,  0         OUT[3:0]
```

FIG. 10

EP 1 970 791 A2

# FIG. 11

EP 1 970 791 A2

# F I G. 1 2

Address 31

| Address | |
|---|---|
| | : |
| 1000 | First application |
| 2000 | Second application |
| | : |
| M000 | M-th application |
| | : |

# F I G . 1 3

EP 1 970 791 A2

# F I G. 1 4

First step

Source code → Extract logic operations

Second step
P bits or less? / Q bits or less? — no

yes

Third step
Same logic operations? — no

yes

Fourth step
Distribute logic operations to single ALU and set wiring

Perform regular logic operation distribution and setting of wiring

Operation arrangement / wiring information

# F I G. 1 5

First step

Source code → Extract logic operations

Second step

P bits or less?/ Q bits or less? — no →

yes ↓

Third step

Same logic operations? — no →

yes ↓

Fourth step

| Distribute logic operations to single ALU and set wiring/ designate same logic operation | Distribute logic operations to single ALU and set wiring/ designate different logic operations | Perform regular logic operation distribution and setting of wiring |

Operation arrangement/ wiring information

# F I G. 1 6

External information input step

External information → Convert it to source code changing information

Source code changing step ↓

source code → Change source code

First step

Optimized code ← Extract logic operations

Second step

P bits or less?/ Q bits or less? — no

yes

Third step

Same logic operations? — no

yes

Fourth step

Distribute logic operations to single ALU and set wiring

Perform regular logic operation distribution and setting of wiring

Operation arrangement/ wiring information

# F I G. 1 7

Higher module

    :

Adder

#(.WL (8),                                          ⇒ Change this row to "#(.WL(4),"

i_adder  (.in1 (signal1),   .in2 (signal2),   .out (signal3));

    :

module Adder (in1, in2, out);

Instantiation

    parameter WL = 4; // word length

    input [WL-1:0] in1;
    input [WL-1:0] in2;

    output [WL-1:0] out;

    assign out = in1 + in2;

endmodule

EP 1 970 791 A2

# F I G. 1 8

First step

Source code → Extract logic operations

Second step — P bits or less?/ Q bits or less? — no

yes

Third step — Same logic operations? — no

yes

Fourth step

Error → Distribute logic operations to single ALU and set wiring

Perform regular logic operation distribution and setting of wiring ← Error

Fault cell position information

Fault judging step

yes → Fault cell? — no

Fault cell? → yes — no

Operation arrangement/ wiring information

# F I G. 1 9

# FIG. 20

X1

10a  20a  21a  22a

Cell | Switch | Cell | Switch | Cell

Switch | Cell | Switch | Cell | Switch

Cell | ⓐ | Cell | ⓑ | Cell

ⓓ | | | | ⓔ

Switch | Cell | ⓒⓕ Switch | Cell | Switch

Cell | Switch | Cell | Switch | Cell

4

# F I G. 2 1

# FIG. 22

EP 1 970 791 A2

# F I G. 2 3

EP 1 970 791 A2

# FIG. 24

Sc        E[3:0]

```
        MSB ←    → LSB
00:  A[3:0]
01:  A[1:0],  C[1:0]
10:  A[3:2],  C[3:2]
11:  C[3:0]
```

# FIG. 25

X'

10    20

| Cell | Switch | Cell | Switch | Cell |
| ⓐ | Cell | ⓑ | Cell | Switch |
| 4 | ⓒ | Cell | Switch | Cell |
| Cell | Switch | Cell | | |
| ⓓ | | ⓔ | Cell | Switch |
| 4 | Cell | | | |
| Cell | Switch ⓕ | Cell | Switch | Cell |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004221997 A
- JP 2004102988 A